# EUROPEAN PATENT APPLICATION

(11) **EP 4 645 728 A1**
(43) Date of publication of application: **05.11.2025**
(21) Application number: 24744247.8
(22) Date of filing: 16.01.2024
(51) Int. Cl.: H04L 1/06

(54) **COMMUNICATION METHOD AND RELATED APPARATUS**

(30) Priority: 19.01.2023 CN 202310141088
(71) Applicant: Huawei Technologies Co., Ltd., Shenzhen, Guangdong 518129 (CN)
(72) Inventor: LI, Ting, Shenzhen, Guangdong 518129 (CN); WANG, Xiaohan, Shenzhen, Guangdong 518129 (CN); JIN, Huangping, Shenzhen, Guangdong 518129 (CN)
(74) Representative: Pfenning, Meinig & Partner mbB
(86) International application number: PCT/CN2024/072547
(87) International publication number: WO 2024/153072

(57) **Abstract**

A communication method and a related apparatus are provided. The method includes: sending first information and second information to a terminal device. The first information indicates K reference signal resources, the K reference signal resources respectively correspond to K antenna port groups, each antenna port group includes at least one antenna port, there is a mapping relationship between antenna ports included in the K antenna port groups and antenna ports included in one antenna array of a network device, and K is an integer greater than 1. The second information indicates a type configuration of a first codebook, and the type configuration of the first codebook indicates the terminal device to report, based on the first codebook, joint channel state information corresponding to the K reference signal resources. In the method, for a network device with an antenna panel having more than a specific quantity of antenna ports, even under an NZP CSI-RS resource port constraint, channel information corresponding to each antenna port included in one antenna array of the network device can be obtained, so that CSI measurement precision is improved.

## Description

This application claims priority to Chinese Patent Application No. 202310141088.8, filed with the China National Intellectual Property Administration on January 19, 2023 and entitled "COMMUNICATION METHOD AND RELATED APPARATUS", which is incorporated herein by reference in its entirety.

### TECHNICAL FIELD

This application relates to the field of communication technologies, and in particular, to a communication method and a related apparatus.

### BACKGROUND

Multiple-input multiple-output (multiple-input multiple-output, MIMO) is an antenna system in which a plurality of antennas are used at each of a transmit end and a receive end to form a plurality of channels between the transmit end and the receive end, to improve a channel capacity. When a base station sends data to a user equipment (user equipment, UE) by using a MIMO technology, the base station needs to rely on channel state information (channel state information, CSI) fed back by the UE to the base station. Therefore, CSI measurement between the base station and the UE is critical to transmission performance of a MIMO system.

Currently, the base station needs to first send signaling for channel measurement configuration, to notify the UE of channel measurement time and behavior. Next, the base station sends a pilot signal to the UE for channel measurement. The UE performs measurement based on the pilot signal sent by the base station, to obtain a CSI measurement result. Then, the base station determines, based on the CSI measurement result reported by the UE, precoding information for service data delivery, and send service data.

However, for a base station with an antenna panel having more than a specific quantity of antenna ports (for example, 32 antenna ports), CSI measurement precision is low under a current non-zero power channel state information reference signal (non-zero power channel state information reference signal, NZP CSI-RS) resource port constraint.

### SUMMARY

Embodiments of this application provide a communication method and a related apparatus, to improve CSI measurement precision under an NZP CSI-RS resource port constraint.

According to a first aspect, an embodiment of this application provides a communication method. The method may be performed by a communication apparatus. The communication apparatus may be a device, or may be a chip (system) or a circuit used in the device. This is not limited in this application. The method includes:
sending first information and second information to a terminal device.

The first information indicates K reference signal resources, the K reference signal resources respectively correspond to K antenna port groups, each antenna port group includes at least one antenna port, there is a mapping relationship between antenna ports included in the K antenna port groups and antenna ports included in one antenna array of a network device, and K is an integer greater than 1. The second information indicates a type configuration of a first codebook, and the type configuration of the first codebook indicates the terminal device to report, based on the first codebook, joint channel state information corresponding to the K reference signal resources.

In this embodiment of this application, the communication method is provided. The network device sends the first information and the second information to the terminal device. The network device herein may alternatively be a processor/chip that may be configured to execute computer-executable instructions. This is not limited in this embodiment of this application.

The first information in this embodiment of this application indicates the K reference signal resources, the K reference signal resources respectively correspond to the K antenna port groups, and each antenna port group includes at least one antenna port. It may be understood that each antenna port group may be considered as a virtual transmission reception node (transmission reception point, TRP), and the virtual TRP may receive and send data by using the at least one antenna port included in the TRP. There is the mapping relationship between the antenna ports included in the K antenna port groups and the antenna ports included in the antenna array of the network device. It may be understood that the K antenna port groups may be considered as being obtained by classifying the antenna ports included in the antenna array of the network device.

The second information in this embodiment of this application indicates the type configuration of the first codebook, and the type configuration of the first codebook is used to determine a type of the first codebook. The type of the first codebook is a codebook type that supports joint measurement and feedback of channel state information of a plurality of reference signal resources. Specifically, the type of the first codebook may include a codebook type that supports a same quantity of ports corresponding to all reference signal resources, and may also include a codebook type that supports different quantities of ports corresponding to all reference signal resources. This is not limited in this embodiment of this application. It should be understood that any codebook type that supports the foregoing measurement and feedback capabilities falls within the protection scope of this embodiment of this application. For example, the type of the first codebook may be a coherent joint transmission (coherent joint transmission, CJT) codebook. The type configuration of the first codebook indicates the terminal device to report, based on the first codebook, the joint channel state information corresponding to the K reference signal resources.

In this embodiment of this application, the first information and the second information may be carried in different fields of a same packet, or may be separately carried in different packets. This is not limited in this embodiment of this application.

Correspondingly, the terminal device in this embodiment of this application receives the first information and the second information from the network device, performs channel measurement on the K reference signal resources according to indications of the first information and the second information, and reports, based on the first codebook, the joint channel state information corresponding to the K reference signal resources.

In this embodiment of this application, the antenna ports included in the antenna array of the network device are classified to obtain the K antenna port groups that each include at least one antenna port. The K antenna port groups respectively correspond to the K reference signal resources. For each antenna port group, a reference signal is sent on a reference signal resource corresponding to the antenna port group, to implement CSI measurement between the network device and the terminal device. In this way, for a network device with an antenna array that has more than a specific quantity of antenna ports (for example, more than 32 antenna ports), even under an NZP CSI-RS resource port constraint, channel information corresponding to each antenna port included in the antenna array of the network device can be obtained, so that CSI measurement precision is improved.

In a possible implementation, the K reference signal resources respectively corresponding to the K antenna port groups are different from each other.

In this implementation of this application, a possible specific implementation of a correspondence between the K antenna port groups and the K reference signal resources is provided. Specifically, the K reference signal resources respectively corresponding to the K antenna port groups are different from each other. In this way, reference signals can be sent on different reference signal resources for antenna port groups, so that the channel information corresponding to each antenna port included in the antenna array of the network device can be obtained through CSI measurement, and therefore the CSI measurement precision is improved.

In a possible implementation, quantities of antenna ports separately included in the K antenna port groups are the same.

In this implementation of this application, a possible specific implementation of a quantity of antenna ports in the K antenna port groups is provided. Specifically, the quantities of antenna ports separately included in the K antenna port groups are the same. It may be understood that the K antenna port groups in this embodiment of this application may be considered as K antenna port groups that are obtained by uniformly classifying the antenna ports included in the antenna array of the network device and that have a same quantity of antenna ports. In this embodiment of this application, the terminal device can report, to the network device by using a codebook (for example, including but not limited to the CJT codebook) that supports joint channel state information feedback on the K reference signal resources, the joint channel state information measured on the K reference signal resources, so that high-precision CSI measurement between the network device and the terminal device is implemented.

In a possible implementation, quantities of antenna ports separately included in the K antenna port groups are different from each other.

In this implementation of this application, a possible specific implementation of a quantity of antenna ports in the K antenna port groups is provided. Specifically, the quantities of antenna ports separately included in the K antenna port groups are different from each other. It may be understood that the K antenna port groups in this embodiment of this application may be considered as K antenna port groups that are obtained by non-uniformly classifying the antenna ports included in the antenna array of the network device and that have different quantities of antenna ports. In this embodiment of this application, the terminal device can report, to the network device by using a codebook that supports joint channel state information feedback on the K reference signal resources, the joint channel state information measured on the K reference signal resources, so that high-precision CSI measurement between the network device and the terminal device is implemented.

In a possible implementation, the antenna port included in each antenna port group is uniformly arranged.

In this implementation of this application, a possible specific implementation of antenna port arrangement in the K antenna port groups is provided. Specifically, the antenna port included in each of the K antenna port groups is uniformly arranged, which may specifically mean that the antenna port is uniformly arranged in a horizontal direction and a vertical direction. It may be understood that the antenna ports included in the antenna array of the network device are uniformly arranged, and the antenna port included in each of the K antenna port groups obtained by properly classifying the antenna ports included in the antenna array are also uniformly arranged; or the antenna ports included in the antenna array of the network device are not uniformly arranged, and the antenna port included in each of the K antenna port groups obtained by properly classifying the antenna ports included in the antenna array is uniformly arranged. Proper classification herein may specifically include but is not limited to classification manners such as horizontal classification, vertical classification, and network classification. This is not limited in this embodiment of this application. In this embodiment of this application, regardless of whether the antenna ports included in the antenna array of the network device are uniformly arranged, the antenna port included in each of the K antenna port groups obtained by properly classifying the antenna ports of the antenna array is uniformly arranged, so that channel state information can be reported by using a high-precision codebook in any arrangement scenario of the antenna array of the network device, and therefore the CSI measurement precision is improved.

In a possible implementation, that there is the mapping relationship between the antenna ports included in the K antenna port groups and the antenna ports included in the antenna array of the network device includes:
the antenna port included in each antenna port group is a subset of the antenna ports included in the antenna array of the network device, a total quantity of the antenna ports included in the K antenna port groups is equal to a total quantity of the antenna ports included in the antenna array of the network device, and the K antenna port groups include different antenna ports.

In this implementation of this application, a possible specific implementation of the mapping relationship between the antenna ports included in the K antenna port groups and the antenna ports included in the antenna array of the network device is provided. Specifically, the antenna port included in each of the K antenna port groups is the subset of the antenna ports included in the antenna array of the network device, the total quantity of the antenna ports included in the K antenna port groups is equal to the total quantity of the antenna ports included in the antenna array of the network device, and the K antenna port groups include different antenna ports. It may be understood that the K antenna port groups may be considered as K subsets obtained by classifying the antenna ports included in the antenna array of the network device. In addition, there is no intersection set between the K subsets, the K subsets are not empty sets, and a union set of the K subsets is the antenna ports included in the antenna array of the network device. In this embodiment of this application, the channel information corresponding to each antenna port included in the antenna array of the network device can be obtained through CSI measurement by using the mapping relationship between the antenna ports included in the K antenna port groups and the antenna ports included in the antenna array of the network device, so that the CSI measurement precision is improved.

In a possible implementation, the mapping relationship between the antenna ports included in the K antenna port groups and the antenna ports included in the antenna array of the network device meets K M×N-dimensional mapping matrices.

A first mapping matrix W1 in the K M×N-dimensional mapping matrices represents a mapping relationship between N antenna ports included in a first antenna port group and M antenna ports included in the antenna array of the network device, the first antenna port group is any one of the K antenna port groups, N is an integer greater than 0 and less than M, and M is a positive integer.

In this implementation of this application, a possible specific implementation of the mapping relationship between the antenna ports included in the K antenna port groups and the antenna ports included in the antenna array of the network device is provided. Specifically, the mapping relationship may meet the K M×N-dimensional mapping matrices, in other words, the K M×N-dimensional mapping matrices may be used to represent the mapping relationship between the antenna ports included in the K antenna port groups and the antenna ports included in the antenna array of the network device. It may be understood that the first mapping matrix W1 in the K M×N-dimensional mapping matrices represents the mapping relationship between the N antenna ports included in the first antenna port group in the K antenna port groups and the M antenna ports included in the antenna array of the network device. Similarly, a K^{th} mapping matrix WK in the K M×N-dimensional mapping matrices represents a mapping relationship between N antenna ports included in a K^{th} antenna port group in the K antenna port groups and M antenna ports included in the antenna array of the network device. In this embodiment of this application, the K M×N-dimensional mapping matrices are used to represent the mapping relationship between the antenna ports included in the K antenna port groups and the antenna ports included in the antenna array of the network device, so that the channel information corresponding to each antenna port included in the antenna array of the network device can be obtained through CSI measurement, and therefore the CSI measurement precision is improved.

In a possible implementation, the K M×N-dimensional mapping matrices are respectively used to determine the antenna ports corresponding to the K antenna port groups.

The first mapping matrix W1 in the K M×N-dimensional mapping matrices is used to determine the antenna port corresponding to the first antenna port group, a first element w_{m,n} included in W1 is a first value, m represents an m^{th} antenna port included in the antenna array of the network device, n represents an n^{th} antenna port included in the first antenna port group, and m and n meet the following relationships: 1≤m≤M, and 1≤n≤N.

It may be understood that the first mapping matrix W1 includes N elements whose values are the first value, values of remaining M×N-N elements in the first mapping matrix W1 are a second value, and the second value is different from the first value.

In this implementation of this application, a possible specific implementation of determining the antenna ports corresponding to the K antenna port groups is provided. Specifically, the antenna ports corresponding to the K antenna port groups may be respectively determined by using the K M×N-dimensional mapping matrices. It may be understood that the first mapping matrix W1 in the K M×N-dimensional mapping matrices is used to determine the antenna port corresponding to the first antenna port group in the K antenna port groups. Specifically, the m^{th} antenna port included in the antenna array of the network device may be determined, based on the first element w_{m,n} whose value is the first value and that is included in the first mapping matrix W1, as the n^{th} antenna port corresponding to the first antenna port group. Similarly, the K^{th} mapping matrix WK in the K M×N-dimensional mapping matrices is used to determine the antenna port corresponding to the K^{th} antenna port group in the K antenna port groups. Specifically, the m^{th} antenna port included in the antenna array of the network device may be determined, based on a first element w_{m,n} whose value is the first value and that is included in the K^{th} mapping matrix WK, as an n^{th} antenna port corresponding to the K^{th} antenna port group. In this embodiment of this application, the K M×N-dimensional mapping matrices are respectively used to determine the antenna ports corresponding to the K antenna port groups, so that the channel information corresponding to each antenna port included in the antenna array of the network device can be obtained through CSI measurement, and therefore the CSI measurement precision is improved.

In a possible implementation, a type of the first codebook is a coherent joint transmission CJT codebook.

In this implementation of this application, a possible specific implementation of the type of the first codebook is provided. Specifically, the type of the first codebook is the coherent joint transmission CJT codebook. In this embodiment of this application, the CJT codebook may indicate the terminal device to report, based on the CJT codebook, the joint channel state information corresponding to the K reference signal resources.

In a possible implementation, the method further includes:
determining, based on the type of the first codebook and the joint channel state information corresponding to the K reference signal resources, joint first channel information of the antenna ports included in the K antenna port groups; and
determining, based on the first channel information and the mapping relationship between the antenna ports included in the K antenna port groups and the antenna ports included in the antenna array of the network device, second channel information corresponding to the antenna array of the network device, where the second channel information is used for data transmission between the network device and the terminal device.

In this implementation of this application, a possible specific implementation of determining the channel information is provided. Specifically, the network device determines, based on the type of the first codebook and the joint channel state information corresponding to the K reference signal resources, the joint first channel information of the antenna ports included in the K antenna port groups. It may be understood that the first channel information herein includes a precoding matrix indicator (precoding matrix indicator, PMI) reported by the terminal device, and may be specifically information fed back by the terminal device for determining a channel matrix or a precoding matrix. The first channel information may further include a joint channel rank indicator (rank indicator, RI), channel state indicator (channel quality indicator, CQI), and the like that correspond to the K reference signal resources. This is not limited in this embodiment of this application. Then, the network device determines, based on the first channel information and the mapping relationship between the antenna ports included in the K antenna port groups and the antenna ports included in the antenna array of the network device, the second channel information corresponding to the antenna array of the network device. It may be understood that the second channel information herein includes the channel matrix or the precoding matrix determined based on a feedback amount corresponding to the PMI reported by the terminal device, and the second channel information may be used for data transmission between the network device and the terminal device. In this embodiment of this application, the channel information corresponding to each antenna port included in the antenna array of the network device is obtained through high-precision CSI measurement, and the channel information used for data transmission between the network device and the terminal device can be determined accordingly, so that communication efficiency can be improved.

In a possible implementation, the method further includes:
sending reference signals to the terminal device on the corresponding K reference signal resources by using the K antenna port groups respectively, and receiving the joint channel state information that corresponds to the K reference signal resources and that is from the terminal device.

In this implementation of this application, a possible specific implementation of sending the reference signals and receiving the channel state information is provided. Specifically, the network device sends the reference signals (for example, CSI-RSs) to the terminal device on the corresponding K reference signal resources by using the K antenna port groups respectively, and receives the joint channel state information corresponding to the K reference signal resources from the terminal device. In this embodiment of this application, CSI measurement between the network device and the terminal device can be implemented. In this way, for a network device with an antenna panel having more than a specific quantity of antenna ports (for example, more than 32 antenna ports), even under an NZP CSI-RS resource port constraint, channel information corresponding to each antenna port included in one antenna array of the network device can be obtained, so that CSI measurement precision is improved.

In a possible implementation, the first information includes information about the K reference signal resources, and the information about the K reference signal resources indicates the terminal device to perform channel measurement on the K reference signal resources.

In this implementation of this application, a possible specific implementation of the first information is provided. Specifically, the first information includes the information about the K reference signal resources, and the information about the K reference signal resources indicates the terminal device to perform channel measurement (CSI measurement) on the K reference signal resources. It may be understood that the information about the K reference signal resources may include reference signal resource configuration information, and the reference signal resource configuration information is used to determine the K reference signal resources; or the information about the K reference signal resources may include the K reference signal resources.

In a possible implementation, the second information includes information about the first codebook, and the information about the first codebook indicates the terminal device to report, based on the first codebook, the joint channel state information corresponding to the K reference signal resources.

In this implementation of this application, a possible specific implementation of the second information is provided. Specifically, the second information includes the information about the first codebook, the information about the first codebook includes but is not limited to the type of the first codebook, and the information about the first codebook indicates the terminal device to report, based on the first codebook, the joint channel state information corresponding to the K reference signal resources. It may be understood that the information about the first codebook may include codebook type configuration information, and the codebook type configuration information is used to determine the first codebook; or the information about the first codebook may include the first codebook.

In a possible implementation, the first information and/or the second information are/is carried in at least one of the following:
a radio resource control RRC message, a media access control control element MAC CE, downlink control information DCI, and a physical downlink shared channel PDSCH.

In this implementation of this application, a possible specific implementation of information sending is provided. Specifically, the first information and/or the second information may be sent by using one or more of the radio resource control (radio resource control, RRC) message, the media access control control element (media access control control element, MAC CE), the downlink control information (downlink control information, DCI), and the physical downlink shared channel (physical downlink shared channel, PDSCH).

According to a second aspect, an embodiment of this application provides a communication method. The method may be performed by a communication apparatus. The communication apparatus may be a device, or may be a chip (system) or a circuit used in the device. This is not limited in this application. The method includes:
receiving first information and second information from a network device.

The first information indicates K reference signal resources, the K reference signal resources respectively correspond to K antenna port groups, each antenna port group includes at least one antenna port, there is a mapping relationship between antenna ports included in the K antenna port groups and antenna ports included in one antenna array of the network device, and K is an integer greater than 1. The second information indicates a type configuration of a first codebook, and the type configuration of the first codebook indicates a terminal device to report, based on the first codebook, joint channel state information corresponding to the K reference signal resources.

In this embodiment of this application, the communication method is provided. The terminal device receives the first information and the second information from the network device. The terminal device herein may alternatively be a processor/chip that may be configured to execute computer-executable instructions. This is not limited in this embodiment of this application.

The first information in this embodiment of this application indicates the K reference signal resources, the K reference signal resources respectively correspond to the K antenna port groups, and each antenna port group includes at least one antenna port. It may be understood that each antenna port group may be considered as a virtual TRP, and the virtual TRP may receive and send data by using the at least one antenna port included in the TRP. There is the mapping relationship between the antenna ports included in the K antenna port groups and the antenna ports included in the antenna array of the network device. It may be understood that the K antenna port groups may be considered as being obtained by classifying the antenna ports included in the antenna array of the network device.

The second information in this embodiment of this application indicates the type configuration of the first codebook, and the type configuration of the first codebook is used to determine a type of the first codebook. The type of the first codebook is a codebook type that supports joint measurement and feedback of channel state information of a plurality of reference signal resources. Specifically, the type of the first codebook may include a codebook type that supports a same quantity of ports corresponding to all reference signal resources, and may also include a codebook type that supports different quantities of ports corresponding to all reference signal resources. This is not limited in this embodiment of this application. It should be understood that any codebook type that supports the foregoing measurement and feedback capabilities falls within the protection scope of this embodiment of this application. For example, the type of the first codebook may be a CJT codebook. The type configuration of the first codebook indicates the terminal device to report, based on the first codebook, the joint channel state information corresponding to the K reference signal resources.

In this embodiment of this application, the first information and the second information may be carried in different fields of a same packet, or may be separately carried in different packets. This is not limited in this embodiment of this application.

Correspondingly, the network device in this embodiment of this application sends the first information and the second information to the terminal device, indicates, by using the first information and the second information, the terminal device to perform channel measurement on the K reference signal resources, and reports, based on the first codebook, the joint channel state information corresponding to the K reference signal resources.

In this embodiment of this application, the antenna ports included in the antenna array of the network device are classified to obtain the K antenna port groups that each include at least one antenna port. The K antenna port groups respectively correspond to the K reference signal resources. For each antenna port group, a reference signal is sent on a reference signal resource corresponding to the antenna port group, to implement CSI measurement between the network device and the terminal device. In this way, for a network device with an antenna panel that has more than a specific quantity of antenna ports (for example, more than 32 antenna ports), even under an NZP CSI-RS resource port constraint, channel information corresponding to each antenna port included in the antenna array of the network device can be obtained, so that CSI measurement precision is improved.

In a possible implementation, the K reference signal resources respectively corresponding to the K antenna port groups are different from each other.

In this implementation of this application, a possible specific implementation of a correspondence between the K antenna port groups and the K reference signal resources is provided. Specifically, the K reference signal resources respectively corresponding to the K antenna port groups are different from each other. In this way, reference signals can be sent on different reference signal resources for antenna port groups, so that the channel information corresponding to each antenna port included in the antenna array of the network device can be obtained through CSI measurement, and therefore the CSI measurement precision is improved.

In a possible implementation, quantities of antenna ports separately included in the K antenna port groups are the same.

In this implementation of this application, a possible specific implementation of a quantity of antenna ports in the K antenna port groups is provided. Specifically, the quantities of antenna ports separately included in the K antenna port groups are the same. It may be understood that the K antenna port groups in this embodiment of this application may be considered as K antenna port groups that are obtained by uniformly classifying the antenna ports included in the antenna array of the network device and that have a same quantity of antenna ports. In this embodiment of this application, the terminal device can report, to the network device by using a codebook (for example, including but not limited to the CJT codebook) that supports joint channel state information feedback on the K reference signal resources, the joint channel state information measured on the K reference signal resources, so that high-precision CSI measurement between the network device and the terminal device is implemented.

In a possible implementation, quantities of antenna ports separately included in the K antenna port groups are different from each other.

In this implementation of this application, a possible specific implementation of a quantity of antenna ports in the K antenna port groups is provided. Specifically, the quantities of antenna ports separately included in the K antenna port groups are different from each other. It may be understood that the K antenna port groups in this embodiment of this application may be considered as K antenna port groups that are obtained by non-uniformly classifying the antenna ports included in the antenna array of the network device and that have different quantities of antenna ports. In this embodiment of this application, the terminal device can report, to the network device by using a codebook that supports joint channel state information feedback on the K reference signal resources, the joint channel state information measured on the K reference signal resources, so that high-precision CSI measurement between the network device and the terminal device is implemented.

In a possible implementation, the antenna port included in each antenna port group is uniformly arranged.

In this implementation of this application, a possible specific implementation of antenna port arrangement in the K antenna port groups is provided. Specifically, the antenna port included in each of the K antenna port groups is uniformly arranged, which may specifically mean that the antenna port is uniformly arranged in a horizontal direction and a vertical direction. It may be understood that the antenna ports included in the antenna array of the network device are uniformly arranged, and the antenna port included in each of the K antenna port groups obtained by properly classifying the antenna ports included in the antenna array are also uniformly arranged; or the antenna ports included in the antenna array of the network device are not uniformly arranged, and the antenna port included in each of the K antenna port groups obtained by properly classifying the antenna ports included in the antenna array is uniformly arranged. Proper classification herein may specifically include but is not limited to classification manners such as horizontal classification, vertical classification, and network classification. This is not limited in this embodiment of this application. In this embodiment of this application, regardless of whether the antenna ports included in the antenna array of the network device are uniformly arranged, the antenna port included in each of the K antenna port groups obtained by properly classifying the antenna ports of the antenna array is uniformly arranged, so that channel state information can be reported by using a high-precision codebook in any arrangement scenario of the antenna array of the network device, and therefore the CSI measurement precision is improved.

In a possible implementation, that there is the mapping relationship between the antenna ports included in the K antenna port groups and the antenna ports included in the antenna array of the network device includes:
the antenna port included in each antenna port group is a subset of the antenna ports included in the antenna array of the network device, a total quantity of the antenna ports included in the K antenna port groups is equal to a total quantity of the antenna ports included in the antenna array of the network device, and the K antenna port groups include different antenna ports.

In this implementation of this application, a possible specific implementation of the mapping relationship between the antenna ports included in the K antenna port groups and the antenna ports included in the antenna array of the network device is provided. Specifically, the antenna port included in each of the K antenna port groups is the subset of the antenna ports included in the antenna array of the network device, the total quantity of the antenna ports included in the K antenna port groups is equal to the total quantity of the antenna ports included in the antenna array of the network device, and the K antenna port groups include different antenna ports. It may be understood that the K antenna port groups may be considered as K subsets obtained by classifying the antenna ports included in the antenna array of the network device. In addition, there is no intersection set between the K subsets, the K subsets are not empty sets, and a union set of the K subsets is the antenna ports included in the antenna array of the network device. In this embodiment of this application, the channel information corresponding to each antenna port included in the antenna array of the network device can be obtained through CSI measurement by using the mapping relationship between the antenna ports included in the K antenna port groups and the antenna ports included in the antenna array of the network device, so that the CSI measurement precision is improved.

In a possible implementation, the mapping relationship between the antenna ports included in the K antenna port groups and the antenna ports included in the antenna array of the network device meets K M×N-dimensional mapping matrices.

A first mapping matrix W1 in the K M×N-dimensional mapping matrices represents a mapping relationship between N antenna ports included in a first antenna port group and M antenna ports included in the antenna array of the network device, the first antenna port group is any one of the K antenna port groups, N is an integer greater than 0 and less than M, and M is a positive integer.

In this implementation of this application, a possible specific implementation of the mapping relationship between the antenna ports included in the K antenna port groups and the antenna ports included in the antenna array of the network device is provided. Specifically, the mapping relationship may meet the K M×N-dimensional mapping matrices, in other words, the K M×N-dimensional mapping matrices may be used to represent the mapping relationship between the antenna ports included in the K antenna port groups and the antenna ports included in the antenna array of the network device. It may be understood that the first mapping matrix W1 in the K M×N-dimensional mapping matrices represents the mapping relationship between the N antenna ports included in the first antenna port group in the K antenna port groups and the M antenna ports included in the antenna array of the network device. Similarly, a K^{th} mapping matrix WK in the K M×N-dimensional mapping matrices represents a mapping relationship between N antenna ports included in a K^{th} antenna port group in the K antenna port groups and the M antenna ports included in the antenna array of the network device. In this embodiment of this application, the K M×N-dimensional mapping matrices are used to represent the mapping relationship between the antenna ports included in the K antenna port groups and the antenna ports included in the antenna array of the network device, so that the channel information corresponding to each antenna port included in the antenna array of the network device can be obtained through CSI measurement, and therefore the CSI measurement precision is improved.

In a possible implementation, the K M×N-dimensional mapping matrices are respectively used to determine the antenna ports corresponding to the K antenna port groups.

The first mapping matrix W1 in the K M×N-dimensional mapping matrices is used to determine the antenna port corresponding to the first antenna port group, a first element w_{m,n} included in W1 is a first value, m represents an m^{th} antenna port included in the antenna array of the network device, n represents an n^{th} antenna port included in the first antenna port group, and m and n meet the following relationships: 1≤m≤M, and 1≤n≤N.

It may be understood that the first mapping matrix W1 includes N elements whose values are the first value, values of remaining M×N-N elements in the first mapping matrix W1 are a second value, and the second value is different from the first value.

In this implementation of this application, a possible specific implementation of determining the antenna ports corresponding to the K antenna port groups is provided. Specifically, the antenna ports corresponding to the K antenna port groups may be respectively determined by using the K M×N-dimensional mapping matrices. It may be understood that the first mapping matrix W1 in the K M×N-dimensional mapping matrices is used to determine the antenna port corresponding to the first antenna port group in the K antenna port groups. Specifically, the m^{th} antenna port included in the antenna array of the network device may be determined, based on the first element w_{m,n} whose value is the first value and that is included in the first mapping matrix W1, as the n^{th} antenna port corresponding to the first antenna port group. Similarly, the K^{th} mapping matrix WK in the K M×N-dimensional mapping matrices is used to determine the antenna port corresponding to the K^{th} antenna port group in the K antenna port groups. Specifically, the m^{th} antenna port included in the antenna array of the network device may be determined, based on a first element w_{m,n} whose value is the first value and that is included in the K^{th} mapping matrix WK, as an n^{th} antenna port corresponding to the K^{th} antenna port group. In this embodiment of this application, the K M×N-dimensional mapping matrices are respectively used to determine the antenna ports corresponding to the K antenna port groups, so that the channel information corresponding to each antenna port included in the antenna array of the network device can be obtained through CSI measurement, and therefore the CSI measurement precision is improved.

In a possible implementation, a type of the first codebook is a coherent joint transmission CJT codebook.

In this implementation of this application, a possible specific implementation of the type of the first codebook is provided. Specifically, the type of the first codebook is the coherent joint transmission CJT codebook. In this embodiment of this application, the terminal device may report, based on the CJT codebook, the joint channel state information corresponding to the K reference signal resources.

In a possible implementation, the method further includes:
receiving reference signals sent on the corresponding K reference signal resources by using the K antenna port groups respectively, and reporting, to the network device, the joint channel state information corresponding to the K reference signal resources.

In this implementation of this application, a possible specific implementation of receiving the reference signals and reporting the channel state information is provided. Specifically, the terminal device receives the reference signals (for example, CSI-RSs) sent by the network device on the corresponding K reference signal resources by using the K antenna port groups, and reports the joint channel state information corresponding to the K reference signal resources to the network device. In this embodiment of this application, CSI measurement between the network device and the terminal device can be implemented. In this way, for a network device with an antenna panel having more than a specific quantity of antenna ports (for example, more than 32 antenna ports), even under an NZP CSI-RS resource port constraint, channel information corresponding to each antenna port included in one antenna array of the network device can be obtained, so that CSI measurement precision is improved.

In a possible implementation, the first information includes information about the K reference signal resources, and the information about the K reference signal resources indicates the terminal device to perform channel measurement on the K reference signal resources.

In this implementation of this application, a possible specific implementation of the first information is provided. Specifically, the first information includes the information about the K reference signal resources, and the information about the K reference signal resources indicates the terminal device to perform channel measurement (CSI measurement) on the K reference signal resources. It may be understood that the information about the K reference signal resources may include reference signal resource configuration information, and the reference signal resource configuration information is used to determine the K reference signal resources; or the information about the K reference signal resources may include the K reference signal resources.

In a possible implementation, the second information includes information about the first codebook, and the information about the first codebook indicates the terminal device to report, based on the first codebook, the joint channel state information corresponding to the K reference signal resources.

In this implementation of this application, a possible specific implementation of the second information is provided. Specifically, the second information includes the information about the first codebook, the information about the first codebook includes but is not limited to the type of the first codebook, and the information about the first codebook indicates the terminal device to report, based on the first codebook, the joint channel state information corresponding to the K reference signal resources. It may be understood that the information about the first codebook may include codebook type configuration information, and the codebook type configuration information is used to determine the first codebook; or the information about the first codebook may include the first codebook.

In a possible implementation, the first information and/or the second information are/is carried in at least one of the following:
a radio resource control RRC message, a media access control control element MAC CE, downlink control information DCI, and a physical downlink shared channel PDSCH.

In this implementation of this application, a possible specific implementation of information sending is provided. Specifically, the first information and/or the second information may be sent by using one or more of the radio resource control (radio resource control, RRC) message, the media access control control element (media access control control element, MAC CE), the downlink control information (downlink control information, DCI), and the physical downlink shared channel (physical downlink shared channel, PDSCH).

According to a third aspect, an embodiment of this application provides a communication apparatus. The apparatus includes modules or units configured to perform the method according to any implementation of the first aspect.

In a possible design, the apparatus includes:
a communication unit, configured to send first information and second information to a terminal device.

The first information indicates K reference signal resources, the K reference signal resources respectively correspond to K antenna port groups, each antenna port group includes at least one antenna port, there is a mapping relationship between antenna ports included in the K antenna port groups and antenna ports included in one antenna array of a network device, and K is an integer greater than 1. The second information indicates a type configuration of a first codebook, and the type configuration of the first codebook indicates the terminal device to report, based on the first codebook, joint channel state information corresponding to the K reference signal resources.

In a possible implementation, the apparatus further includes:
a processing unit, configured to generate the first information and the second information.

In a possible implementation, the K reference signal resources respectively corresponding to the K antenna port groups are different from each other.

In a possible implementation, quantities of antenna ports separately included in the K antenna port groups are the same.

In a possible implementation, quantities of antenna ports separately included in the K antenna port groups are different from each other.

In a possible implementation, the antenna port included in each antenna port group is uniformly arranged.

In a possible implementation, that there is the mapping relationship between the antenna ports included in the K antenna port groups and the antenna ports included in the antenna array of the network device includes:
the antenna port included in each antenna port group is a subset of the antenna ports included in the antenna array of the network device, a total quantity of the antenna ports included in the K antenna port groups is equal to a total quantity of the antenna ports included in the antenna array of the network device, and the K antenna port groups include different antenna ports.

In a possible implementation, the mapping relationship between the antenna ports included in the K antenna port groups and the antenna ports included in the antenna array of the network device meets K M×N-dimensional mapping matrices.

A first mapping matrix W1 in the K M×N-dimensional mapping matrices represents a mapping relationship between N antenna ports included in a first antenna port group and M antenna ports included in the antenna array of the network device, the first antenna port group is any one of the K antenna port groups, N is an integer greater than 0 and less than M, and M is a positive integer.

In a possible implementation, the K M×N-dimensional mapping matrices are respectively used to determine the antenna ports corresponding to the K antenna port groups.

The first mapping matrix W1 in the K M×N-dimensional mapping matrices is used to determine the antenna port corresponding to the first antenna port group, a first element w_{m,n} included in W1 is a first value, m represents an m^{th} antenna port included in the antenna array of the network device, n represents an n^{th} antenna port included in the first antenna port group, and m and n meet the following relationships: 1≤m≤M, and 1≤n≤N.

In a possible implementation, a type of the first codebook is a coherent joint transmission CJT codebook.

In a possible implementation, the processing unit is further configured to determine, based on the type of the first codebook and the joint channel state information corresponding to the K reference signal resources, joint first channel information of the antenna ports included in the K antenna port groups; and
the processing unit is further configured to determine, based on the first channel information and the mapping relationship between the antenna ports included in the K antenna port groups and the antenna ports included in the antenna array of the network device, second channel information corresponding to the antenna array of the network device, where the second channel information is used for data transmission between the network device and the terminal device.

In a possible implementation, the communication unit is further configured to: send reference signals to the terminal device on the corresponding K reference signal resources by using the K antenna port groups respectively, and receive the joint channel state information that corresponds to the K reference signal resources and that is from the terminal device.

In a possible implementation, the first information includes information about the K reference signal resources, and the information about the K reference signal resources indicates the terminal device to perform channel measurement on the K reference signal resources.

In a possible implementation, the second information includes information about the first codebook, and the information about the first codebook indicates the terminal device to report, based on the first codebook, the joint channel state information corresponding to the K reference signal resources.

In a possible implementation, the first information and/or the second information are/is carried in at least one of the following:
a radio resource control RRC message, a media access control control element MAC CE, downlink control information DCI, and a physical downlink shared channel PDSCH.

In an implementation, the communication apparatus is a communication device. When the communication apparatus is the communication device, the communication unit may be a transceiver or an input/output interface, and the processing unit may be at least one processor. Optionally, the transceiver may be a transceiver circuit. Optionally, the input/output interface may be an input/output circuit.

In another implementation, the communication apparatus is a chip (system) or a circuit used in a communication device. When the communication apparatus is the chip (system) or the circuit used in the communication device, the communication unit may be a communication interface (input/output interface), an interface circuit, an output circuit, an input circuit, a pin, a related circuit, or the like on the chip (system) or the circuit; and the processing unit may be at least one processor, a processing circuit, a logic circuit, or the like.

For technical effect of the third aspect and any possible implementation, refer to descriptions of technical effect corresponding to the first aspect and a corresponding implementation.

According to a fourth aspect, an embodiment of this application provides a communication apparatus. The apparatus includes modules or units configured to perform the method according to any implementation of the second aspect.

In a possible design, the apparatus includes:
a communication unit, configured to receive first information and second information from a network device.

The first information indicates K reference signal resources, the K reference signal resources respectively correspond to K antenna port groups, each antenna port group includes at least one antenna port, there is a mapping relationship between antenna ports included in the K antenna port groups and antenna ports included in one antenna array of the network device, and K is an integer greater than 1. The second information indicates a type configuration of a first codebook, and the type configuration of the first codebook indicates a terminal device to report, based on the first codebook, joint channel state information corresponding to the K reference signal resources.

In a possible implementation, the apparatus further includes:
a processing unit, configured to perform channel measurement on the K reference signal resources.

In a possible implementation, the K reference signal resources respectively corresponding to the K antenna port groups are different from each other.

In a possible implementation, quantities of antenna ports separately included in the K antenna port groups are the same.

In a possible implementation, quantities of antenna ports separately included in the K antenna port groups are different from each other.

In a possible implementation, the antenna port included in each antenna port group is uniformly arranged.

In a possible implementation, that there is the mapping relationship between the antenna ports included in the K antenna port groups and the antenna ports included in the antenna array of the network device includes:
the antenna port included in each antenna port group is a subset of the antenna ports included in the antenna array of the network device, a total quantity of the antenna ports included in the K antenna port groups is equal to a total quantity of the antenna ports included in the antenna array of the network device, and the K antenna port groups include different antenna ports.

In a possible implementation, the mapping relationship between the antenna ports included in the K antenna port groups and the antenna ports included in the antenna array of the network device meets K M×N-dimensional mapping matrices.

A first mapping matrix W1 in the K M×N-dimensional mapping matrices represents a mapping relationship between N antenna ports included in a first antenna port group and M antenna ports included in the antenna array of the network device, the first antenna port group is any one of the K antenna port groups, N is an integer greater than 0 and less than M, and M is a positive integer.

In a possible implementation, the K M×N-dimensional mapping matrices are respectively used to determine the antenna ports corresponding to the K antenna port groups.

The first mapping matrix W1 in the K M×N-dimensional mapping matrices is used to determine the antenna port corresponding to the first antenna port group, a first element w_{m,n} included in W1 is a first value, m represents an m^{th} antenna port included in the antenna array of the network device, n represents an n^{th} antenna port included in the first antenna port group, and m and n meet the following relationships: 1≤m≤M, and 1≤n≤N.

In a possible implementation, a type of the first codebook is a coherent joint transmission CJT codebook.

In a possible implementation, the communication unit is further configured to: receive reference signals sent on the corresponding K reference signal resources by using the K antenna port groups respectively, and report, to the network device, the joint channel state information corresponding to the K reference signal resources.

In a possible implementation, the first information includes information about the K reference signal resources, and the information about the K reference signal resources indicates the terminal device to perform channel measurement on the K reference signal resources.

In a possible implementation, the second information includes information about the first codebook, and the information about the first codebook indicates the terminal device to report, based on the first codebook, the joint channel state information corresponding to the K reference signal resources.

In a possible implementation, the first information and/or the second information are/is carried in at least one of the following:
a radio resource control RRC message, a media access control control element MAC CE, downlink control information DCI, and a physical downlink shared channel PDSCH.

In an implementation, the communication apparatus is a communication device. When the communication apparatus is the communication device, the communication unit may be a transceiver or an input/output interface, and the processing unit may be at least one processor. Optionally, the transceiver may be a transceiver circuit. Optionally, the input/output interface may be an input/output circuit.

In another implementation, the communication apparatus is a chip (system) or a circuit used in a communication device. When the communication apparatus is the chip (system) or the circuit used in the communication device, the communication unit may be a communication interface (input/output interface), an interface circuit, an output circuit, an input circuit, a pin, a related circuit, or the like on the chip (system) or the circuit; and the processing unit may be at least one processor, a processing circuit, a logic circuit, or the like.

For technical effect of the fourth aspect and any possible implementation, refer to descriptions of technical effect corresponding to the second aspect and a corresponding implementation.

According to a fifth aspect, an embodiment of this application provides a communication apparatus. The communication apparatus includes a processor. The processor is coupled to a memory, and may be configured to execute instructions in the memory, to implement the method according to any one of the first aspect and the second aspect and the possible implementations. Optionally, the communication apparatus further includes the memory. Optionally, the communication apparatus further includes a communication interface, and the processor is coupled to the communication interface.

According to a sixth aspect, an embodiment of this application provides a communication apparatus. The apparatus includes a logic circuit and a communication interface. The communication interface is configured to receive information or send information. The logic circuit is configured to receive information or send information through the communication interface, to enable the communication apparatus to perform the method according to any one of the first aspect and the second aspect and the possible implementations.

According to a seventh aspect, an embodiment of this application provides a computer-readable storage medium. The computer-readable storage medium is configured to store a computer program (which may also be referred to as code or instructions). When the computer program is run on a computer, the method according to any one of the first aspect and the second aspect and the possible implementations is implemented.

According to an eighth aspect, an embodiment of this application provides a computer program product. The computer program product includes a computer program (which may also be referred to as code or instructions). When the computer program is run, a computer is enabled to perform the method according to any one of the first aspect and the second aspect and the possible implementations.

According to a ninth aspect, an embodiment of this application provides a chip. The chip includes a processor. The processor is configured to execute instructions. When the processor executes the instructions, the chip is enabled to perform the method according to any one of the first aspect and the second aspect and the possible implementations. Optionally, the chip further includes a communication interface, and the communication interface is configured to receive a signal or send a signal.

According to a tenth aspect, an embodiment of this application provides a communication system. The communication system includes at least one communication apparatus according to the third aspect, communication apparatus according to the fourth aspect, communication apparatus according to the fifth aspect, communication apparatus according to the sixth aspect, or chip according to the ninth aspect.

According to an eleventh aspect, an embodiment of this application provides a communication system. The communication system includes a network device and a terminal device. The network device is configured to perform the method according to any one of the first aspect and the possible implementations, and the terminal device is configured to perform the method according to any one of the second aspect and the possible implementations.

In addition, in a process of performing the method according to any one of the first aspect and the second aspect and the possible implementations, a process related to sending information and/or receiving information and the like in the method may be understood as a process of outputting information by a processor and/or a process of receiving input information by the processor. When outputting the information, the processor may output the information to a transceiver (or a communication interface or a sending module), so that the transceiver transmits the information. After the information is output by the processor, other processing may further need to be performed on the information before the information arrives at the transceiver. Similarly, when the processor receives the input information, the transceiver (or the communication interface or the sending module) receives the information, and inputs the information into the processor. Further, after the transceiver receives the information, other processing may need to be performed on the information before the information is input into the processor.

Based on the foregoing principle, for example, sending information in the foregoing method may be understood as outputting information by the processor. For another example, receiving information may be understood as receiving input information by the processor.

Optionally, operations such as transmission, sending, and receiving related to the processor may be more generally understood as operations such as output, receiving, and input of the processor, unless otherwise specified, or provided that the operations do not contradict actual functions or internal logic of the operations in related descriptions.

Optionally, in a process of performing the method according to any one of the first aspect and the second aspect and the possible implementations, the processor may be a processor specially configured to perform the method, or may be a processor, for example, a general-purpose processor, that performs the method by executing computer instructions in a memory. The memory may be a non-transitory (non-transitory) memory, for example, a read-only memory (Read-Only Memory, ROM). The memory and the processor may be integrated on a same chip, or may be separately disposed on different chips. A type of the memory and a manner of disposing the memory and the processor are not limited in this embodiment of this application.

In a possible implementation, at least one memory is located outside an apparatus.

In another possible implementation, at least one memory is located in an apparatus.

In still another possible implementation, some memories in at least one memory are located in an apparatus, and the other memories are located outside the apparatus.

In this application, the processor and the memory may alternatively be integrated into one device. In other words, the processor and the memory may alternatively be integrated together.

In this embodiment of this application, the antenna ports included in the antenna array of the network device are classified to obtain the K antenna port groups that each include at least one antenna port. The K antenna port groups respectively correspond to the K reference signal resources. For each antenna port group, a reference signal is sent on a reference signal resource corresponding to the antenna port group, to implement CSI measurement between the network device and the terminal device. In this way, for a network device with an antenna panel that has more than a specific quantity of antenna ports (for example, more than 32 antenna ports), even under an NZP CSI-RS resource port constraint, channel information corresponding to each antenna port included in the antenna array of the network device can be obtained, so that CSI measurement precision is improved.

### BRIEF DESCRIPTION OF DRAWINGS

To describe technical solutions in embodiments of this application more clearly, the following briefly describes accompanying drawings used in embodiments of this application. It is clear that the accompanying drawings described below show merely some embodiments of this application, and a person of ordinary skill in the art may still derive other drawings from these accompanying drawings without creative efforts.
FIG. 1 is a diagram of a communication system according to an embodiment of this application;
FIG. 2 is a schematic flowchart of CSI measurement according to an embodiment of this application;
FIG. 3 is a diagram of a network element structure according to an embodiment of this application;
FIG. 4 is a schematic flowchart of a communication method according to an embodiment of this application;
FIG. 5A is a diagram of dividing an antenna array according to an embodiment of this application;
FIG. 5B is a diagram of dividing an antenna array according to an embodiment of this application;
FIG. 5C is a diagram of dividing an antenna array according to an embodiment of this application;
FIG. 6 is a diagram of dividing an antenna array according to an embodiment of this application;
FIG. 7 is a schematic flowchart of a communication method according to an embodiment of this application;
FIG. 8 is a diagram of a structure of a communication apparatus according to an embodiment of this application;
FIG. 9 is a diagram of a structure of a communication apparatus according to an embodiment of this application; and
FIG. 10 is a diagram of a structure of a chip according to an embodiment of this application.

### DESCRIPTION OF EMBODIMENTS

To make objectives, technical solutions, and advantages of this application clearer, the following describes embodiments of this application with reference to accompanying drawings in embodiments of this application.

Terms "first", "second", and the like in the specification, claims, and accompanying drawings of this application are merely used to distinguish between different objects, and are not used to describe a specific order. In addition, terms "include", "have", and any other variants thereof are intended to cover non-exclusive inclusion. For example, a process, method, system, product, device, or the like that includes a series of steps or units is not limited to the listed steps or units, but optionally further includes an unlisted step, unit, or the like, or optionally further includes another inherent step or unit of the process, method, product, device, or the like.

"An embodiment" mentioned in the specification indicates that a particular characteristic, structure, or feature described with reference to this embodiment may be included in at least one embodiment of this application. The phrase appearing in various locations in the specification does not necessarily mean a same embodiment, and neither means an independent or alternative embodiment mutually exclusive with another embodiment. It may be explicitly and implicitly understood by a person skilled in the art that, in embodiments of this application, unless otherwise specified or a logical conflict occurs, terms and/or descriptions in embodiments are consistent and may be mutually referenced, and technical features in different embodiments may be combined based on an internal logical relationship thereof, to form a new embodiment.

It should be understood that, in this application, "at least one (item)" means one or more, "a plurality of" means two or more, "at least two (items)" means two, three, or more, and "and/or" is used to describe an association relationship between associated objects, and indicates that there may be three relationships. For example, "A and/or B" may indicate the following three cases: Only A exists, only B exists, and both A and B exist, where A and B may be singular or plural. The character "/" generally indicates an "or" relationship between associated objects. "At least one of the following items (pieces)" or a similar expression thereof refers to any combination of these items, including any combination of singular items (pieces) or plural items (pieces). For example, at least one of a, b, or c may indicate a, b, c, a and b, a and c, b and c, or a, b, and c, where a, b, and c may be singular or plural.

It should be noted that in this application, an "indication" may include a direct indication, an indirect indication, an explicit indication, and an implicit indication. When a piece of indication information is described as indicating A, it may be understood as that the indication information carries A, directly indicates A, or indirectly indicates A.

In this application, information indicated by the indication information is referred to as to-be-indicated information. In a specific implementation process, there are many manners of indicating the to-be-indicated information. For example, the manners include but are not limited to a manner in which the to-be-indicated information, for example, the to-be-indicated information itself or an index of the to-be-indicated information, may be directly indicated, and a manner in which the to-be-indicated information may be indirectly indicated by indicating other information. There is an association relationship between the other information and the to-be-indicated information. Alternatively, only a part of the to-be-indicated information may be indicated, and the other part of the to-be-indicated information is known or pre-agreed on. For example, specific information may alternatively be indicated by using an arrangement sequence of a plurality of pieces of information that is pre-agreed on (for example, specified in a protocol), to reduce indication overheads to some extent. The to-be-indicated information may be sent as a whole, or may be divided into a plurality of pieces of sub-information for separate sending. In addition, sending periodicities and/or sending occasions of these pieces of sub-information may be the same or may be different. A specific sending method is not limited in this application. The sending periodicities and/or the sending occasions of these pieces of sub-information may be predefined, for example, predefined according to a protocol, or may be configured by a transmit end device by sending configuration information to a receive end device.

It should be noted that in this application, "sending" may be understood as "output", and "receiving" may be understood as "input". In "sending information to A", "to A" indicates only a direction of information transmission, A is a destination, and "sending information to A" is not necessarily directly performed over an air interface. "Sending information to A" includes directly sending the information to A and indirectly sending the information to A through a transmitter. Therefore, "sending information to A" may also be understood as "outputting information to A". Similarly, "receiving information from A" indicates that a source of the information is A, and includes directly receiving the information from A and indirectly receiving the information from A through a receiver. Therefore, "receiving information from A" may also be understood as "inputting information from A".

A method provided in this application may be applied to various communication systems, for example, an internet of things (internet of things, IoT) system, a narrowband internet of things (narrowband internet of things, NB-IoT) system, a long term evolution (long term evolution, LTE) system, a 5th generation (5th generation, 5G) communication system, and a new communication system (for example, 6G) emerging in future communication development.

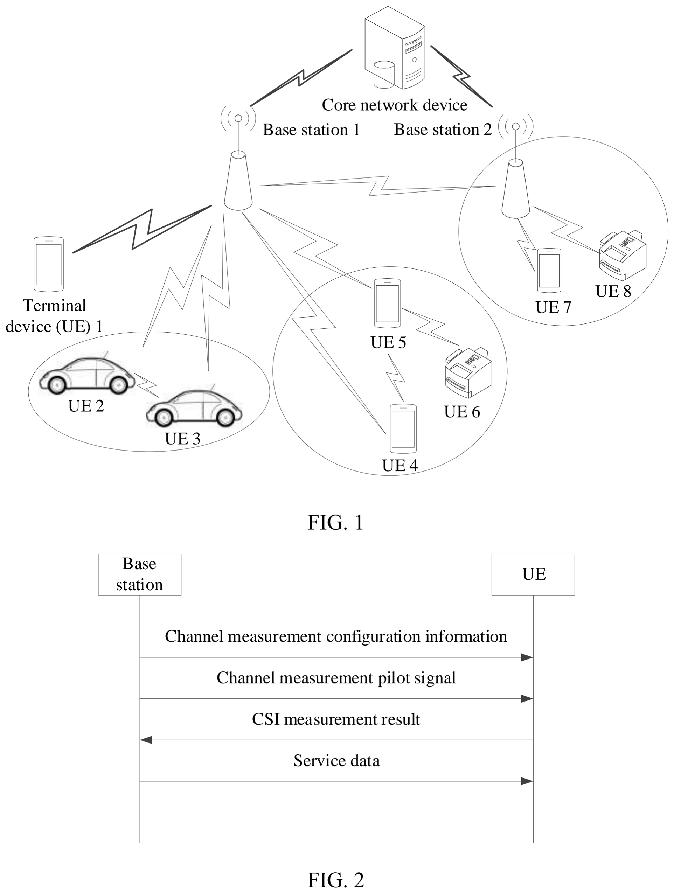

The technical solutions provided in this application may be further applied to machine type communication (machine type communication, MTC), a long term evolution-machine (long term evolution-machine, LTE-M) technology, a device-to-device (device-to-device, D2D) network, a machine-to-machine (machine-to-machine, M2M) network, an internet of things (internet of things, IoT) network, or another network. The IoT network may include, for example, an internet of vehicles. Communication modes in an internet of vehicles system are collectively referred to as vehicle-to-everything (vehicle-to-everything, V2X, where X may represent everything). For example, the V2X may include vehicle-to-vehicle (vehicle-to-vehicle, V2V) communication, vehicle-to-infrastructure (vehicle-to-infrastructure, V2I) communication, vehicle-to-pedestrian (vehicle-to-pedestrian, V2P) communication, or vehicle-to-network (vehicle-to-network, V2N) communication. For example, in FIG. 1 described below, terminal devices may communicate with each other by using the D2D technology, the M2M technology, or the V2X technology.

FIG. 1 is a diagram of a communication system according to an embodiment of this application.

As shown in FIG. 1, the communication system may include at least one access network device and at least one terminal device.

The access network device and the terminal device are separately described as follows.

For example, the access network device may be a next generation NodeB (next generation NodeB, gNB), a next generation evolved NodeB (next generation evolved NodeB, ng-eNB), or an access network device in future 6G communication. The access network device may be any device with a wireless transceiver function, and includes but is not limited to the base station described above. The base station may alternatively be a base station in a future communication system such as a 6th generation communication system. Optionally, the access network device may be an access node, a wireless relay node, a wireless backhaul node, or the like in a wireless local area network (wireless fidelity, Wi-Fi) system. Optionally, the access network device may be a radio controller in a cloud radio access network (cloud radio access network, CRAN) scenario. Optionally, the access network device may be a wearable device, a vehicle-mounted device, or the like. Optionally, the access network device may alternatively be a small cell, a transmission reception point (transmission reception point, TRP) (which may also be referred to as a transmission point), or the like. It may be understood that the access network device may alternatively be a base station or the like in a future evolved public land mobile network (public land mobile network, PLMN).

In some deployments, the base station (for example, the gNB) may include a central unit (central unit, CU) and a distributed unit (distributed unit, DU). To be specific, functions of a base station in an access network are divided, some functions of the base station are deployed on a CU, and remaining functions are deployed on a DU. In addition, a plurality of DUs share one CU. This reduces costs and facilitates network expansion. In some other deployments of the base station, the CU may be further divided into a CU-control plane (control plane, CP), a CU-user plane (user plane, UP), and the like. In still some other deployments of the base station, the base station may alternatively be an antenna unit (radio unit, RU) or the like. In still some other deployments of the base station, the base station may alternatively be of an open radio access network (open radio access network, ORAN) architecture or the like. A specific type of the base station is not limited in this application. For example, when the base station is of the ORAN architecture, the base station shown in this embodiment of this application may be an access network device in an ORAN, a module in the access network device, or the like. In an ORAN system, a CU may also be referred to as an open (open, O)-CU, a DU may also be referred to as an O-DU, a CU-DU may also be referred to as an O-CU-DU, a CU-UP may also be referred to as an O-CU-UP, and an RU may also be referred to as an O-RU.

For ease of description, the following describes the method in this application by using an example in which the access network device is a base station.

For example, the terminal device may also be referred to as a user equipment (user equipment, UE) or a terminal. The terminal device is a device with a wireless transceiver function, and may be deployed on land, including an indoor, outdoor, handheld, wearable, or vehicle-mounted device; or may be deployed on water, for example, on a ship; or may be deployed in air, for example, on an airplane, a balloon, or a satellite. The terminal device may be a mobile phone (mobile phone), a tablet computer (Pad), a computer with a wireless transceiver function, a virtual reality (virtual reality, VR) terminal device, an augmented reality (augmented reality, AR) terminal device, a wireless terminal in industrial control (industrial control), a wireless terminal in self-driving (self-driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), or the like. It may be understood that the terminal device may alternatively be a terminal device in a future 6G network, a terminal device in a future evolved PLMN, or the like.

It may be understood that the terminal device shown in this application may not only include a vehicle (for example, an entire vehicle) in an internet of vehicles, but also include a vehicle-mounted device, a vehicle-mounted terminal, or the like in the internet of vehicles. A specific form of the terminal device used in the internet of vehicles is not limited in this application.

For ease of description, the following describes the method in this application by using an example in which the terminal device is a UE.

As shown in FIG. 1, the communication system may further include at least one core network device. The core network device is described as follows.

For example, the core network device includes services such as user access control, mobility management, session management, user security authentication, and charging. The core network device includes a plurality of functional units, and may be divided into a control plane functional entity and a data plane functional entity. An access and mobility management unit (access and mobility management function, AMF) is responsible for user access management, security authentication, and mobility management. A location management unit (location management function, LMF) is responsible for managing and controlling a positioning service request of a target terminal, and processing positioning-related information. A user plane unit (user plane function, UPF) is responsible for managing functions such as user plane data transmission and traffic statistics collection.

The communication system shown in FIG. 1 includes one core network device, two base stations, and eight UEs, for example, the core network device, a base station 1, a base station 2, and a UE 1 to a UE 8 in FIG. 1. In the communication system, the base station 1 may send downlink signals such as configuration information or downlink control information (downlink control information, DCI) to the UE 1 to a UE 6, and the UE 1 to the UE 6 may send uplink signals such as SRSs or physical uplink shared channels (physical uplink shared channels, PUSCHs) to the base station 1. The base station 1 may further send downlink signals to a UE 7 and the UE 8 through the base station 2, and the UE 7 and the UE 8 may send uplink signals to the base station 1 through the base station 2. The base station 2 may send downlink signals such as configuration information or DCI to the UE 7 and the UE 8, and the UE 7 and the UE 8 may send uplink signals such as SRSs or PUSCHs to the base station 2. It may be understood that, for a mode of communication between UEs, refer to the foregoing descriptions. Details are not described herein again.

It should be understood that FIG. 1 shows an example of one core network device, two base stations, eight UEs, and communication links between communication devices. Optionally, the communication system may include a plurality of base stations, and a coverage area of each base station may include another quantity of UEs, for example, more or fewer UEs. This is not limited in this application.

A plurality of antennas may be configured for each communication device, for example, the core network device, the base station 1, the base station 2, or each of the UE 1 to the UE 8 in FIG. 1. The plurality of antennas may include at least one transmit antenna for sending a signal, at least one receive antenna for receiving a signal, and the like. A specific structure of each communication device is not limited in this embodiment of this application. Optionally, the communication system may further include another network entity, for example, a network controller or a mobility management entity. This is not limited in this embodiment of this application.

It may be understood that the diagram of the communication system shown in FIG. 1 is merely an example. For a diagram of a communication system in another form, refer to a related standard or protocol or the like. Details are not described herein again.

Embodiments shown below are applicable to the communication system shown in FIG. 1, and are also applicable to a communication system in another form. This is not described in detail below again.

This application provides a communication method. The method is applied to the field of communication technologies, for example, communication in a CSI measurement process. To describe the solutions of this application more clearly, the following first describes some knowledge related to CSI measurement.

In the wireless communication field, channel state information (channel state information, CSI) refers to a channel attribute of a communication link. The CSI describes a fading factor of a signal on each transmission path, that is, a value of each element in a channel gain matrix H, for example, signal scattering (scattering), environment fading (fading, multipath fading or shadowing fading), or power decay of distance (power decay of distance). The CSI may enable a communication system to adapt to a current channel condition, to ensure highly reliable and high-rate communication in a multi-antenna system.

A multiple-input multiple-output (multiple-input multiple-output, MIMO) technology is an antenna system in which a plurality of antennas are used at each of a transmit end and a receive end to form a plurality of channels between the transmit end and the receive end, to improve a channel capacity. When a base station sends data to a UE by using the MIMO technology, the base station needs to rely on CSI fed back by the UE to the base station.

Therefore, CSI measurement between the base station and the UE is critical to transmission performance of a MIMO system.

For a basic CSI measurement procedure, specifically refer to FIG. 2. FIG. 2 is a schematic flowchart of CSI measurement according to an embodiment of this application.

As shown in FIG. 2, the base station needs to first send channel measurement configuration information to the UE for channel measurement configuration, to notify the UE of channel measurement time and behavior. Then, the base station sends a channel measurement pilot signal to the UE for channel measurement. The UE performs CSI measurement based on the channel measurement pilot signal sent by the base station, to obtain a CSI measurement result, and reports the CSI measurement result to the base station. Then, the base station determines, based on the CSI measurement result reported by the UE, precoding information for service data delivering, and send service data.

The CSI measurement result reported by the UE may include a plurality of pieces of information, for example, including but not limited to a channel rank indicator (rank indicator, RI), a channel state indicator (channel quality indicator, CQI), and a precoding matrix indicator (precoding matrix indicator, PMI). This is not limited in this application.

Correspondingly, the base station may determine, based on the RI fed back by the UE, a quantity of flows for data transmission to the UE; the base station may determine, based on the CQI fed back by the UE, a modulation order for data transmission to the UE and a code rate of channel coding; and the base station may determine, based on the PMI fed back by the UE, precoding for data transmission to the UE.

Optionally, one or more of the channel measurement configuration information, the channel measurement pilot signal, the CSI measurement result, and the service data may be sent by using one or more of a radio resource control (radio resource control, RRC) message, a media access control control element (media access control control element, MAC CE), downlink control information (downlink control information, DCI), and a physical downlink shared channel (physical downlink shared channel, PDSCH).

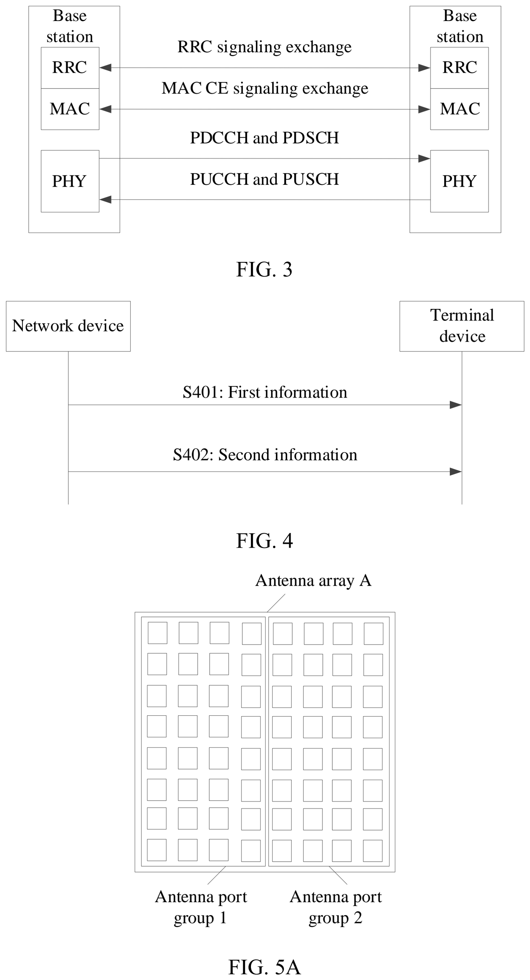

For a specific sending manner, refer to FIG. 3. FIG. 3 is a diagram of a network element structure according to an embodiment of this application.

As shown in FIG. 3, the base station and the UE each include an RRC signaling exchange module, a MAC signaling exchange module, and a physical layer (physical layer, PHY) signaling exchange module.

The RRC signaling exchange module is a module used by the base station and the UE to send and receive RRC signaling. The RRC signaling may include but is not limited to one or more of the channel measurement configuration information, the channel measurement pilot signal, and the CSI measurement result.

The MAC signaling exchange module is a module used by the base station and the UE to send and receive MAC-CE signaling. The MAC-CE signaling may include but is not limited to one or more of the channel measurement configuration information, the channel measurement pilot signal, and the CSI measurement result.

The PHY signaling exchange module is a module used by the base station and the UE to send and receive uplink control signaling by using physical uplink control channels (physical uplink control channels, PUCCHs), send and receive downlink control signaling by using physical downlink control channels (physical downlink control channels, PDCCHs), send and receive uplink data by using physical uplink shared channels (physical uplink shared channels, PUSCHs), and send and receive downlink data by using physical downlink shared channels (physical downlink shared channels, PDSCHs). The uplink/downlink data may include but is not limited to the service data.

It should be understood that the foregoing sending manner is merely used as a possible example for description, and should not constitute a limitation on embodiments of this application. All embodiments obtained based on a supplement or a proper variation of the sending manner fall within the protection scope of embodiments of this application.

In addition, a high-precision codebook in a current radio access system standard is mainly based on a CSI measurement scenario of a single TRP. To be specific, during CSI measurement, a UE considers by default that subsequent data is sent from one TRP. The TRP uses one associated non-zero power channel state information reference signal (non-zero power channel state information reference signal, NZP CSI-RS) resource in an NZP CSI-RS resource set as a channel measurement resource (channel measurement resource, CMR), and completes CSI measurement and feedback on the preconfigured CMR and an interference measurement resource (interference measurement resource, IMR) corresponding to the CMR.

To improve system throughput performance and user experience, a plurality of TRPs may serve one user in a multi-station coordination manner, for example, through coherent joint transmission (coherent joint transmission, CJT) or non-coherent joint transmission (non-coherent joint transmission, NCJT).

In the CJT coordination manner, a plurality of TRPs simultaneously serve a UE. It may be understood that transmission is transparent to the UE. From a perspective of the UE, the plurality of TRPs in a coordination set may be equivalent to one large base station. Therefore, the UE needs to jointly feed back channel state information of all the TRPs in the coordination set, to enable coherent joint transmission. In a CSI measurement and feedback scenario supporting CJT, one CMR is supported to include K (K≥1) NZP CSI-RS resources in one NZP CSI-RS resource set for CSI measurement and feedback of CJT, one CSI-RS resource is associated with one TRP or TRP group, each NZP CSI-RS resource has a same quantity of CSI-RS ports, and a quantity of ports of a single NZP CSI-RS resource usually does not exceed 32.

Specifically, a network device configures K NZP CSI-RS resources for the UE for channel measurement, and the UE jointly feeds back, to the network device by using a CJT codebook, channel information measured on the K NZP CSI-RS resources.

Currently, MIMO systems are evolving toward larger antenna scales and more diversified antenna forms, for example, an antenna array with 64 transmit and receive ports and an irregular antenna array. For an antenna array with more than 32 antenna ports, better CSI measurement needs to be implemented under a current NZP CSI-RS resource port constraint. In addition, the current high-precision codebook is initially designed mainly for regular and uniform antenna arrays; and for irregular and non-uniform antenna arrays, CSI measurement feedback precision needs to be improved.

In an aspect, it can be learned from the foregoing descriptions that, when one NZP CSI-RS resource is measured as a CMR, a maximum of 32 ports are usually supported. For the antenna array with more than 32 antenna ports, for example, an antenna array with 64 antenna ports, the antenna ports and CSI-RS ports cannot be directly mapped in a one-to-one manner. Therefore, precoding-loaded CSI-RSs need to be sent on 32 CSI-RS ports to complete CSI measurement of the antenna array with the 64 antenna ports.

Therefore, this application provides two manners, to implement better CSI measurement. The two manners are specifically as follows:

### Manner 1 (outer weight manner):

During CSI-RS sending, dimension reduction is performed on the antenna array with the 64 antenna ports in a manner of outer weight loading, to map the antenna array with the 64 antenna ports into a regular virtual array including P virtual ports, where P is less than or equal to 32 and is greater than 0. It should be understood that, the outer weight loading is a process of mapping the 64 antenna ports into the P virtual ports through dimension reduction, and outer weights are a mapping matrix or weight matrix used for dimension reduction of the antenna ports. The P virtual ports are in a one-to-one correspondence with P CSI-RS ports in the 32 CSI-RS ports. The UE completes CSI measurement and feedback based on a codebook type configured by the network device. The network device obtains, based on CSI, channel information or a precoding matrix corresponding to the P virtual ports, and then determines, with reference to the outer weights loaded during CSI-RS measurement, a precoding matrix corresponding to the antenna array with the 64 antenna ports.

### Manner 2 (port selection codebook manner):

The UE performs CSI measurement and feedback by using a port selection (port selection) codebook. A base station side determines, with an uplink channel by using partial reciprocity (such as corresponding angle and delay reciprocity) between space domains and frequency domains of uplink and downlink channels, one or more space domain beams or angle-delay pairs that may be with strong downlink signals, and loads the one or more space domain beams or angle-delay pairs to CSI-RSs in a precoding manner, so that each space domain beam or angle-delay pair corresponds to one CSI-RS port. The UE completes CSI measurement and feedback based on the port selection codebook, and the network device determines, based on CSI and precoding information loaded by the network device, channel information or a precoding matrix corresponding to the antenna array with the 64 antenna ports.

In another aspect, it can be learned from the foregoing descriptions that the current high-precision codebook is initially designed mainly for the regular and uniform antenna arrays, and all space domain basis vectors involved in a non-port selection codebook use vectors in a discrete Fourier transform (discrete Fourier transform, DFT) matrix, and cannot well adapt to the irregular and non-uniform antenna arrays. Therefore, for the irregular and non-uniform antenna arrays, to obtain more accurate CSI, similar to CSI measurement of the antenna array with the 64 antenna ports, CSI measurement feedback precision needs to be improved.

Therefore, this application provides two manners, to improve the CSI measurement feedback precision. The two manners are specifically as follows:

### Manner 1 (outer weight manner):

During CSI-RS sending, an irregular or non-uniform antenna array is mapped, in a manner of outer weight loading, into a regular virtual array including P virtual ports, where P is less than or equal to 32 and is greater than 0. It should be understood that, the outer weight loading is a process of mapping the 64 antenna ports into the P virtual ports through dimension reduction, and outer weights are a mapping matrix or weight matrix used for dimension reduction of the antenna ports. The P virtual ports are in a one-to-one correspondence with P CSI-RS ports in the 32 CSI-RS ports. The UE completes CSI measurement and feedback based on a codebook type configured by the network device. The network device obtains, based on CSI, channel information or a precoding matrix corresponding to the P virtual ports, and then determines, with reference to the outer weights loaded during CSI-RS measurement, a precoding matrix corresponding to the irregular or non-uniform antenna array.

### Manner 2 (port selection codebook manner):

The UE performs CSI measurement and feedback by using a port selection (port selection) codebook. A base station side determines, with an uplink channel by using partial reciprocity (such as corresponding angle and delay reciprocity) between space domains and frequency domains of uplink and downlink channels, one or more space domain beams or angle-delay pairs that may be with strong downlink signals, and loads the one or more space domain beams or angle-delay pairs to CSI-RSs in a precoding manner, so that each space domain beam or angle-delay pair corresponds to one CSI-RS port. The UE completes CSI measurement and feedback based on the port selection codebook, and the network device determines, based on CSI and precoding information loaded by the network device, channel information or a precoding matrix corresponding to an irregular or non-uniform antenna array.

However, in the two manners respectively provided in the foregoing two aspects, for both a regular and uniform antenna array with more than 32 antenna ports and an irregular or non-uniform antenna array, specific defects exist.

In the manner 1 (outer weight manner), a used outer weight is related only to a feature of an antenna array, and is irrelevant to a location of a UE that performs CSI measurement. For UEs at different locations, a same NZP CSI-RS resource may be configured for CSI measurement. However, only channel information or precoding information corresponding to a mapped virtual array (that is, a virtual array including P virtual ports) can be obtained through CSI measurement, and channel information corresponding to each antenna port of the original antenna array cannot be obtained. Consequently, a degree of freedom loss exists, and a data transmission performance loss is caused.

In the manner 2 (port selection codebook manner), a port selection codebook is used, and channels between an antenna array and UEs at different locations have different space domain and frequency domain features. Therefore, for the UEs at the different locations, different precoding is loaded on CSI-RSs, and different NZP CSI-RS resources need to be configured for CSI measurement, resulting in high pilot resource overheads.

For technical problems of low CSI measurement precision, low CSI measurement feedback precision, and high resource overheads in the foregoing CSI measurement process, embodiments of this application provide a new communication method, to implement the following:
(1) for an antenna array with more than 32 antenna ports, better (higher-precision) CSI measurement can be implemented under a current NZP CSI-RS resource port constraint;
(2) for an irregular or non-uniform antenna array, CSI measurement feedback precision can be improved; and
(3) on a premise that the CSI measurement precision and the CSI measurement feedback precision are ensured, CSI measurement is further applicable to UEs at different locations, so that resource overheads can be reduced.

FIG. 4 is a schematic flowchart of a communication method according to an embodiment of this application. The communication method is applied to the field of communication technologies, for example, communication in a CSI measurement process. The communication method includes but is not limited to the following steps.

S401: A network device sends first information to a terminal device. Correspondingly, the terminal device receives the first information from the network device.

S402: The network device sends second information to the terminal device. Correspondingly, the terminal device receives the second information from the network device.

It may be understood that the network device in this embodiment of this application is a device equipped with a processor/chip that can be configured to execute computer-executable instructions, or may be the processor/chip that can be configured to execute computer-executable instructions. This is not limited in this embodiment of this application. Optionally, the network device may be an access network device, for example, a base station or a transmission point TRP, and may be specifically the access network device (including but not limited to any one of the base station 1 and the base station 2) in FIG. 1; and is configured to perform the communication method in this embodiment of this application, to improve CSI measurement precision under an NZP CSI-RS resource port constraint.

It may be understood that the terminal device in this embodiment of this application is a device equipped with a processor/chip that can be configured to execute computer-executable instructions, or may be the processor/chip that can be configured to execute computer-executable instructions. This is not limited in this embodiment of this application. Optionally, the terminal device may be a handheld terminal (for example, a mobile phone or a tablet computer), may be a vehicle-mounted terminal (for example, a wireless terminal in self-driving) or the like, and may be specifically the terminal device (including but not limited to any one of the UE 1 to the UE 8) in FIG. 1; and is configured to participate in performing the communication method in this embodiment of this application, to improve the CSI measurement precision under the NZP CSI-RS resource port constraint.

The first information indicates K reference signal resources, and K is an integer greater than 1.

Specifically, the K reference signal resources respectively correspond to K antenna port groups, each antenna port group includes at least one antenna port, and there is a mapping relationship between antenna ports included in the K antenna port groups and antenna ports included in one antenna array of the network device. It should be understood that the antenna array is located on a same antenna panel or in a same radome. Optionally, a physical size of the antenna panel on which the antenna array is located or a physical size of the radome in which the antenna array is located does not exceed a specific range, for example, 0.5 m*1.5 m. This is not limited in this embodiment of this application.

It may be understood that each antenna port group may be considered as a virtual TRP, and the virtual TRP (antenna port group) may receive and send data by using the at least one antenna port included in the TRP.

It may be understood that the K antenna port groups may be considered as being obtained by classifying the antenna ports included in the antenna array of the network device.

Optionally, the first information indicating the K reference signal resources may be implemented by the first information including information about the K reference signal resources.

Specifically, the information about the K reference signal resources may include reference signal resource configuration information, and the reference signal resource configuration information is used to determine the K reference signal resources; or the information about the K reference signal resources may include the K reference signal resources.

It may be understood that the information about the K reference signal resources indicates the terminal device to perform channel measurement (CSI measurement) on the K reference signal resources.

It may be understood that the foregoing manner in which the first information including the information about the K reference signal resources implements the first information indicating the K reference signal resources is merely used as a possible example for description, and should not constitute a limitation on embodiments of this application. All embodiments obtained based on a supplement or a proper variation of the example manner fall within the protection scope of embodiments of this application.

The second information indicates a type configuration of a first codebook.

Specifically, the type configuration of the first codebook is used to determine a type of the first codebook.

The type of the first codebook is a codebook type that supports joint measurement and feedback of channel state information of a plurality of reference signal resources. Specifically, the type of the first codebook may include a codebook type that supports a same quantity of ports corresponding to all reference signal resources, and may also include a codebook type that supports different quantities of ports corresponding to all reference signal resources. This is not limited in this embodiment of this application. It should be understood that any codebook type that supports the foregoing measurement and feedback capabilities falls within the protection scope of this embodiment of this application.

Optionally, the type of the first codebook may include but is not limited to a coherent joint transmission (coherent joint transmission, CJT) codebook.

It may be understood that the type configuration of the first codebook indicates the terminal device to report, based on the first codebook, the joint channel state information corresponding to the K reference signal resources.

Optionally, the second information indicating the type configuration of the first codebook may be implemented by the second information including information about the first codebook.

Specifically, the information about the first codebook may include codebook type configuration information, and the codebook type configuration information is used to determine the first codebook; or the information about the first codebook may include the first codebook.

It may be understood that the information about the first codebook includes but is not limited to the type of the first codebook, and the information about the first codebook indicates the terminal device to report, based on the first codebook, the joint channel state information corresponding to the K reference signal resources.

It may be understood that the foregoing manner in which the second information including the information about the first codebook implements the second information indicating the type configuration of the first codebook is merely used as a possible example for description, and should not constitute a limitation on embodiments of this application. All embodiments obtained based on a supplement or a proper variation of the example manner fall within the protection scope of embodiments of this application.

Optionally, the first information and/or the second information in steps S401 and S402 may be sent by using one or more of a radio resource control (RRC) message, a media access control control element (MAC CE), downlink control information (DCI), and a physical downlink shared channel (PDSCH). This is not limited in this embodiment of this application.

Optionally, after sending the first information and the second information, the network device in this embodiment of this application further sends reference signals (for example, CSI-RSs) to the terminal device on the corresponding K reference signal resources by using the K antenna port groups respectively, and receives the joint channel state information that corresponds to the K reference signal resources and that is reported by the terminal device.

Correspondingly, the terminal device in this embodiment of this application performs channel measurement on the K reference signal resources according to indications of the first information and the second information, that is, measures the reference signals (for example, the CSI-RSs) received on the K reference signal resources, and reports, based on the first codebook, the joint channel state information corresponding to the K reference signal resources.

The reference signals are sent to the terminal device, and the channel state information reported by the terminal device is received, so that CSI measurement between the network device and the terminal device can be implemented. In this way, for a network device with an antenna array having more than a specific quantity of antenna ports (for example, more than 32 antenna ports), even under an NZP CSI-RS resource port constraint, channel information corresponding to each antenna port included in one antenna array of the network device can be obtained, so that CSI measurement precision is improved.

Further, optionally, after receiving the joint channel state information that corresponds to the K reference signal resources and that is reported by the terminal device, the network device may determine, based on the joint channel state information, channel information used for service data transmission with the terminal device. Specific steps may be as follows:
Step 1: The network device determines, based on the type of the first codebook and the joint channel state information corresponding to the K reference signal resources, joint first channel information of the antenna ports included in the K antenna port groups.

It may be understood that the first channel information herein includes a precoding matrix indicator (precoding matrix indicator, PMI) reported by the terminal device, and may be specifically information fed back by the terminal device for determining a channel matrix or a precoding matrix. The first channel information may further include a joint RI, CQI, and the like that correspond to the K reference signal resources. This is not limited in this embodiment of this application.

Step 2: The network device then determines, based on the first channel information and the mapping relationship between the antenna ports included in the K antenna port groups and the antenna ports included in the antenna array of the network device, second channel information corresponding to the antenna array of the network device.

It may be understood that the second channel information herein includes the channel matrix or the precoding matrix determined based on a feedback amount corresponding to the PMI reported by the terminal device, and the second channel information may be used for data transmission between the network device and the terminal device.

In this embodiment of this application, channel information corresponding to each antenna port included in the antenna array of the network device is obtained through high-precision CSI measurement, and the channel information used for data transmission between the network device and the terminal device can be determined accordingly, so that communication efficiency can be improved.

In this embodiment of this application, the antenna ports included in the antenna array of the network device are classified to obtain the K antenna port groups that each include at least one antenna port. The K antenna port groups respectively correspond to the K reference signal resources. For each antenna port group, a reference signal is sent on a reference signal resource corresponding to the antenna port group, to implement CSI measurement between the network device and the terminal device. In this way, for a network device with an antenna array having more than a specific quantity of antenna ports (for example, more than 32 antenna ports), even under an NZP CSI-RS resource port constraint, channel information corresponding to each antenna port included in one antenna array of the network device can be obtained, so that CSI measurement precision is improved.

In a possible embodiment, the first information and the second information may be carried in different fields of a same packet, or may be separately carried in different packets. This is not limited in this embodiment of this application.

The following describes several possible cases by using examples.

### Case 1:

When the first information and the second information are carried in different fields of a same packet, the first information and the second information may be collectively referred to as indication information or configuration information.

In this case, the foregoing steps S401 and S402 are a same step.

Specifically, the network device delivers the indication information or configuration information to the terminal device, to indicate the K reference signal resources and the type configuration of the first codebook. For the K reference signal resources and the type configuration of the first codebook, refer to the descriptions of the foregoing steps S401 and S402. Details are not described herein again.

In this case, the indication information or configuration information further indicates the terminal device to perform channel measurement on the K reference signal resources, and report, based on the first codebook, the joint channel state information corresponding to the K reference signal resources.

### Case 2:

When the first information and the second information are separately carried in different packets, as shown in the foregoing steps S401 and S402, different steps may be separately performed.

Specifically, the network device delivers the first information to the terminal device, to indicate the K reference signal resources; and the network device delivers the second information to the terminal device, to indicate the type configuration of the first codebook. For the K reference signal resources and the type configuration of the first codebook, refer to the descriptions of the foregoing steps S401 and S402. Details are not described herein again.

In this case, the first information further indicates the terminal device to perform channel measurement on the K reference signal resources, and the second information further indicates the terminal device to report, based on the first codebook, the joint channel state information corresponding to the K reference signal resources.

Optionally, in this case, there is no sequence for performing steps S401 and S402. Step S401 may be performed before step S402, step S402 may be performed before step S401, or steps S401 and S402 may be simultaneously performed. This is not limited in this embodiment of this application.

It may be understood that the foregoing two cases are merely used as possible examples for description, and should not constitute a limitation on embodiments of this application. All embodiments obtained based on a supplement or a proper variation of the example cases fall within the protection scope of embodiments of this application.

In a possible embodiment, the K reference signal resources respectively corresponding to the K antenna port groups are different from each other.

In this embodiment of this application, the K reference signal resources respectively corresponding to the K antenna port groups are different from each other. In this way, reference signals can be sent on different reference signal resources for antenna port groups, so that the channel information corresponding to each antenna port included in the antenna array of the network device can be obtained through CSI measurement, and therefore the CSI measurement precision is improved.

In a possible embodiment, quantities of antenna ports separately included in the K antenna port groups are the same or different. The following provides descriptions with different cases.

Case 1: The quantities of antenna ports separately included in the K antenna port groups are the same.

In this embodiment of this application, the quantities of antenna ports separately included in the K antenna port groups are the same.

It may be understood that the K antenna port groups may be considered as K antenna port groups that are obtained by uniformly classifying the antenna ports included in the antenna array of the network device and that have a same quantity of antenna ports.

In this embodiment of this application, the terminal device can report, to the network device by using a codebook (for example, including but not limited to the CJT codebook) that supports joint channel state information feedback on the K reference signal resources, the joint channel state information measured on the K reference signal resources, so that high-precision CSI measurement between the network device and the terminal device is implemented.

Case 2: The quantities of antenna ports separately included in the K antenna port groups are different from each other.

In this embodiment of this application, the quantities of antenna ports separately included in the K antenna port groups are different from each other.

It may be understood that the K antenna port groups may be considered as K antenna port groups that are obtained by non-uniformly classifying the antenna ports included in the antenna array of the network device and that have different quantities of antenna ports.

In this embodiment of this application, the terminal device can report, to the network device by using a codebook that supports joint channel state information feedback on the K reference signal resources, the joint channel state information measured on the K reference signal resources, so that high-precision CSI measurement between the network device and the terminal device is implemented.

In a possible embodiment, the antenna port included in each of the K antenna port groups is uniformly arranged.

The antenna port included in each of the K antenna port groups is uniformly arranged, which may specifically mean that the antenna port is uniformly arranged in a horizontal direction and a vertical direction.

Further, descriptions may be provided with cases based on whether the antenna ports included in the antenna array of the network device are uniformly arranged.

Case 1: The antenna ports included in the antenna array of the network device are uniformly arranged.

In this case, the uniformly arranged antenna ports of the antenna array of the network device are properly classified, and the antenna port included in each of the obtained K antenna port groups is also uniformly arranged. Proper classification herein may specifically include but is not limited to classification manners such as horizontal classification, vertical classification, and network classification. This is not limited in this embodiment of this application.

Case 2: The antenna ports included in the antenna array of the network device are not uniformly arranged.

In this case, the non-uniformly arranged antenna ports of the antenna array of the network device are properly classified, and the antenna port included in each of the obtained K antenna port groups is uniformly arranged. Proper classification herein may specifically include but is not limited to classification manners such as horizontal classification, vertical classification, and network classification. This is not limited in this embodiment of this application.

In this embodiment of this application, regardless of whether the antenna ports included in the antenna array of the network device are uniformly arranged, the antenna port included in each of the K antenna port groups obtained by properly classifying the antenna ports of the antenna array is uniformly arranged, so that channel state information can be reported by using a high-precision codebook in any arrangement scenario of the antenna array of the network device, and therefore the CSI measurement precision is improved.

In a possible embodiment, the mapping relationship between the antenna ports included in the K antenna port groups and the antenna ports included in the antenna array of the network device may meet the following conditions:
(a) the antenna port included in each of the K antenna port groups is a subset of the antenna ports included in the antenna array of the network device;
(b) a total quantity of the antenna ports included in the K antenna port groups is equal to a total quantity of the antenna ports included in the antenna array of the network device; and
(c) the K antenna port groups include different antenna ports.

It may be understood that the K antenna port groups may be considered as K subsets obtained by classifying the antenna ports included in the antenna array of the network device. In addition, there is no intersection set between the K subsets, the K subsets are not empty sets, and a union set of the K subsets is the antenna ports included in the antenna array of the network device.

In this embodiment of this application, the channel information corresponding to each antenna port included in the antenna array of the network device can be obtained through CSI measurement by using the mapping relationship between the antenna ports included in the K antenna port groups and the antenna ports included in the antenna array of the network device, so that the CSI measurement precision is improved.

In a possible embodiment, the mapping relationship between the antenna ports included in the K antenna port groups and the antenna ports included in the antenna array of the network device may also meet K M×N-dimensional mapping matrices.

A first mapping matrix W1 in the K M×N-dimensional mapping matrices represents a mapping relationship between N antenna ports included in a first antenna port group in the K antenna port groups and M antenna ports included in the antenna array of the network device. A second mapping matrix W2 in the K M×N-dimensional mapping matrices represents a mapping relationship between N antenna ports included in a second antenna port group in the K antenna port groups and the M antenna ports included in the antenna array of the network device. Similarly, by analogy, a K^{th} mapping matrix WK in the K M×N-dimensional mapping matrices represents a mapping relationship between N antenna ports included in a K^{th} antenna port group in the K antenna port groups and the M antenna ports included in the antenna array of the network device.

It may be understood that M is a quantity of antenna ports included in the antenna array of the network device, and M is a positive integer; and N is a quantity of antenna ports included in one of the K antenna port groups, and N is an integer greater than 0 and less than M.

It may be understood that the K M×N-dimensional mapping matrices {W1, W2, ..., WK} may be used to represent the mapping relationship between the antenna ports included in the K antenna port groups and the antenna ports included in the antenna array of the network device.

In this embodiment of this application, the K M×N-dimensional mapping matrices are used to represent the mapping relationship between the antenna ports included in the K antenna port groups and the antenna ports included in the antenna array of the network device, so that the channel information corresponding to each antenna port included in the antenna array of the network device can be obtained through CSI measurement, and therefore the CSI measurement precision is improved.

Further, optionally, the K M×N-dimensional mapping matrices may be respectively used to determine the antenna ports corresponding to the K antenna port groups.

The first mapping matrix W1 in the K M×N-dimensional mapping matrices is used to determine the antenna port corresponding to the first antenna port group in the K antenna port groups. Specifically, an m^{th} antenna port included in the antenna array of the network device may be determined, based on a first element w_{m,n} whose value is a first value and that is included in the first mapping matrix W1, as an n^{th} antenna port corresponding to the first antenna port group. The second mapping matrix W2 in the K M×N-dimensional mapping matrices is used to determine the antenna port corresponding to the second antenna port group in the K antenna port groups. Specifically, the m^{th} antenna port included in the antenna array of the network device may be determined, based on a first element w_{m,n} whose value is the first value and that is included in the second mapping matrix W2, as an n^{th} antenna port corresponding to the second antenna port group. Similarly, by analogy, the K^{th} mapping matrix WK in the K M×N-dimensional mapping matrices is used to determine the antenna port corresponding to the K^{th} antenna port group in the K antenna port groups. Specifically, the m^{th} antenna port included in the antenna array of the network device may be determined, based on a first element w_{m,n} whose value is the first value and that is included in the K^{th} mapping matrix WK, as an n^{th} antenna port corresponding to the K^{th} antenna port group.

It may be understood that m represents the m^{th} antenna port included in the antenna array of the network device, n represents an n^{th} antenna port included in one of the K antenna port groups, and m and n meet the following relationships: 1≤m≤M, and 1≤n≤N.

It may be understood that the K M×N-dimensional mapping matrices (including the first mapping matrix W1, the second mapping matrix W2, ..., and the K^{th} mapping matrix WK) each include N elements whose values are the first value, and values of remaining M×N-N elements in the mapping matrix are not the first value.

In this embodiment of this application, the K M×N-dimensional mapping matrices are respectively used to determine the antenna ports corresponding to the K antenna port groups, so that the channel information corresponding to each antenna port included in the antenna array of the network device can be obtained through CSI measurement, and therefore the CSI measurement precision is improved.

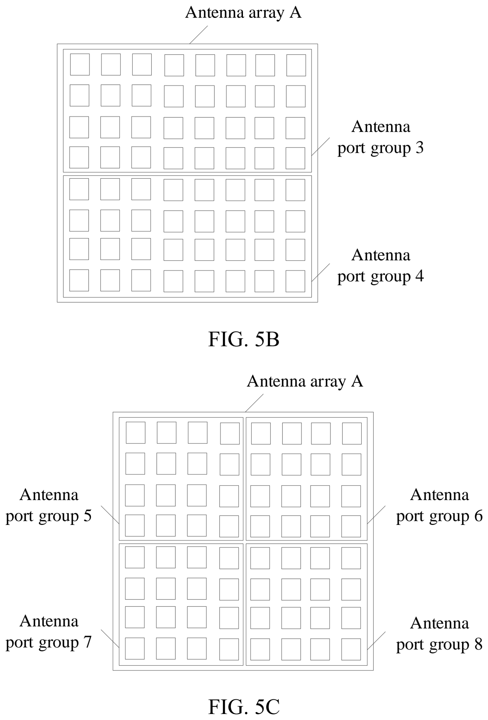

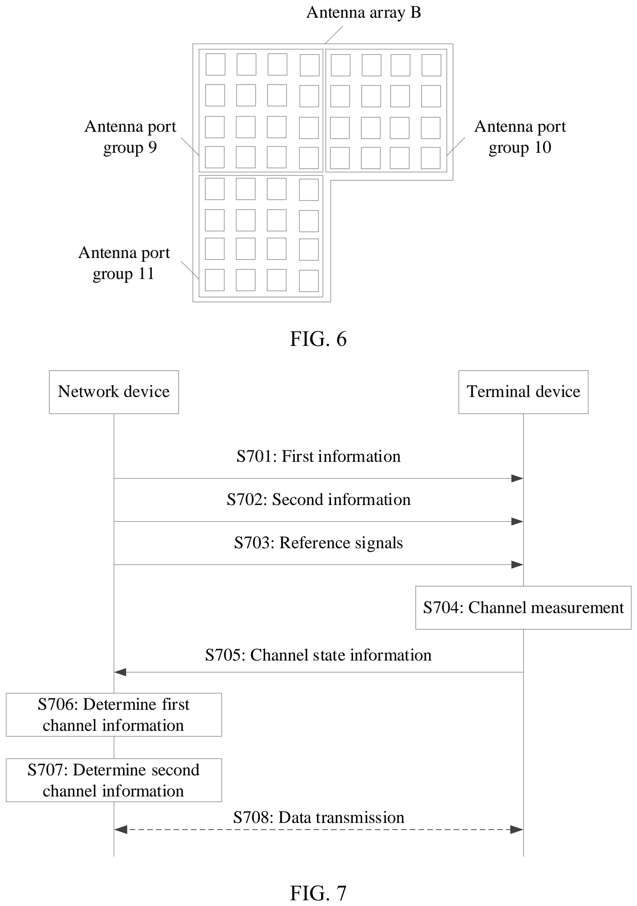

In addition, for details about an arrangement situation of the antenna port included in each of the K antenna port groups and the mapping relationship between the antenna ports included in the K antenna port groups and the antenna ports included in the antenna array of the network device, refer to FIG. 5A, FIG. 5B, FIG. 5C, and FIG. 6.

The following separately describes the arrangement situation and the mapping relationship with reference to FIG. 5A, FIG. 5B, FIG. 5C, and FIG. 6.

FIG. 5A is a diagram of dividing an antenna array according to an embodiment of this application.

As shown in FIG. 5A, the antenna array A is a regular antenna array, of the network device, including 64 antenna ports uniformly arranged in eight rows and eight columns.

In an aspect, the antenna array A may be properly divided in a physical division manner, to obtain two antenna port groups that each include 32 antenna ports, that is, an antenna port group 1 and an antenna port group 2 in FIG. 5A.

The antenna port group 1 is a regular antenna array including 32 antenna ports uniformly arranged in eight rows and four columns, and the antenna port group 2 is a regular antenna array including 32 antenna ports uniformly arranged in eight rows and four columns.

It may be understood that proper division herein may specifically include but is not limited to division manners such as horizontal division, vertical division, and network division. This is not limited in this embodiment of this application.

It may be understood that the antenna port group 1 and the antenna port group 2 may be considered as two virtual TRPs, and the two virtual TRPs (the antenna port group 1 and the antenna port group 2) each may receive and send data through 32 antenna ports included in the virtual TRP.

In another aspect, a mapping relationship between antenna ports included in the antenna port group 1 and the antenna port group 2 and the antenna ports included in the antenna array A may meet the following conditions:
(a) the antenna ports included in each of the antenna port group 1 and the antenna port group 2 is a subset of the antenna ports included in the antenna array A;
(b) a total quantity of the antenna ports included in the antenna port group 1 and the antenna port group 2 is equal to a total quantity of the antenna ports included in the antenna array A; and
(c) the antenna port group 1 and the antenna port group 2 include different antenna ports.

It may be understood that the antenna port group 1 and the antenna port group 2 may be considered as two subsets obtained by classifying the antenna ports included in the antenna array A. In addition, there is no intersection set between the two subsets, the two subsets are not empty sets, and a union set of the two subsets is the antenna ports included in the antenna array A.

In still another aspect, the mapping relationship between the antenna ports included in the antenna port group 1 and the antenna port group 2 and the antenna ports included in the antenna array A may also meet two 64×32-dimensional mapping matrices.

A first mapping matrix W1 in the two 64×32-dimensional mapping matrices represents a mapping relationship between the 32 antenna ports included in the antenna port group 1 and the 64 antenna ports included in the antenna array A. A second mapping matrix W2 in the two 64×32-dimensional mapping matrices represents a mapping relationship between the 32 antenna ports included in the antenna port group 2 and the 64 antenna ports included in the antenna array A.

It may be understood that the two 64×32-dimensional mapping matrices {W1, W2} may be used to represent the mapping relationship between the antenna ports included in the antenna port group 1 and the antenna port group 2 and the antenna ports included in the antenna array A.

Further, the two 64×32-dimensional mapping matrices may be respectively used to determine the antenna ports corresponding to the antenna port group 1 and the antenna port group 2.

The first mapping matrix W1 in the two 64×32-dimensional mapping matrices is used to determine the antenna ports corresponding to the antenna port group 1. Specifically, an m^{th} antenna port included in the antenna array A may be determined, based on an element w_{m,n} whose value is the first value (for example, the first value is 1) and that is included in the first mapping matrix W1, as an n^{th} antenna port corresponding to the antenna port group 1. The second mapping matrix W2 in the two 64×32-dimensional mapping matrices is used to determine the antenna ports corresponding to the antenna port group 2. Specifically, the m^{th} antenna port included in the antenna array A may be determined, based on an element w_{m,n} whose value is 1 and that is included in the second mapping matrix W2, as an n^{th} antenna port corresponding to the antenna port group 2.

It may be understood that m represents the m^{th} antenna port included in the antenna array A, n represents the n^{th} antenna port included in the antenna port group 1 or the antenna port group 2, and m and n meet the following relationships: 1≤m≤64, and 1≤n≤32.

It may be understood that the two 64×32-dimensional mapping matrices (including the first mapping matrix W1 and the second mapping matrix W2) each include 32 elements whose values are 1, values of remaining 64×32-32 elements in the mapping matrix are the second value, and the second value is not 1. For example, the second value may be 0.

It should be understood that the first value being 1 and the second value being 0 in this embodiment of this application are merely used as a possible example for description, and should not constitute a limitation on embodiments of this application. Optionally, the first value and the second value may alternatively be other different values.

FIG. 5B is a diagram of dividing an antenna array according to an embodiment of this application.

As shown in FIG. 5B, the antenna array A is a regular antenna array, of the network device, including 64 antenna ports uniformly arranged in eight rows and eight columns.

In an aspect, the antenna array A may be properly divided in a physical division manner, to obtain two antenna port groups that each include 32 antenna ports, that is, an antenna port group 3 and an antenna port group 4 in FIG. 5B.

The antenna port group 3 is a regular antenna array including 32 antenna ports uniformly arranged in four rows and eight columns, and the antenna port group 4 is a regular antenna array including 32 antenna ports uniformly arranged in four rows and eight columns.

It may be understood that proper division herein may specifically include but is not limited to division manners such as horizontal division, vertical division, and network division. This is not limited in this embodiment of this application.

It may be understood that the antenna port group 3 and the antenna port group 4 may be considered as two virtual TRPs, and the two virtual TRPs (the antenna port group 3 and the antenna port group 4) each may receive and send data through 32 antenna ports included in the virtual TRP.

In another aspect, a mapping relationship between antenna ports included in the antenna port group 3 and the antenna port group 4 and the antenna ports included in the antenna array A may meet the following conditions:
(a) the antenna ports included in each of the antenna port group 3 and the antenna port group 4 is a subset of the antenna ports included in the antenna array A;
(b) a total quantity of the antenna ports included in the antenna port group 3 and the antenna port group 4 is equal to a total quantity of the antenna ports included in the antenna array A; and
(c) the antenna port group 3 and the antenna port group 4 include different antenna ports.

It may be understood that the antenna port group 3 and the antenna port group 4 may be considered as two subsets obtained by classifying the antenna ports included in the antenna array A. In addition, there is no intersection set between the two subsets, the two subsets are not empty sets, and a union set of the two subsets is the antenna ports included in the antenna array A.

In still another aspect, the mapping relationship between the antenna ports included in the antenna port group 3 and the antenna port group 4 and the antenna ports included in the antenna array A may also meet two 64×32-dimensional mapping matrices.

A third mapping matrix W3 in the two 64×32-dimensional mapping matrices represents a mapping relationship between the 32 antenna ports included in the antenna port group 3 and the 64 antenna ports included in the antenna array A. A fourth mapping matrix W4 in the two 64×32-dimensional mapping matrices represents a mapping relationship between the 32 antenna ports included in the antenna port group 4 and the 64 antenna ports included in the antenna array A.

It may be understood that the two 64×32-dimensional mapping matrices {W3, W4} may be used to represent the mapping relationship between the antenna ports included in the antenna port group 3 and the antenna port group 4 and the antenna ports included in the antenna array A.

Further, the two 64×32-dimensional mapping matrices may be respectively used to determine the antenna ports corresponding to the antenna port group 3 and the antenna port group 4.

The third mapping matrix W3 in the two 64×32-dimensional mapping matrices is used to determine the antenna ports corresponding to the antenna port group 3. Specifically, an m^{th} antenna port included in the antenna array A may be determined, based on an element w_{m,n} whose value is the first value (for example, the first value is 1) and that is included in the third mapping matrix W3, as an n^{th} antenna port corresponding to the antenna port group 1. The fourth mapping matrix W4 in the two 64×32-dimensional mapping matrices is used to determine the antenna ports corresponding to the antenna port group 4. Specifically, the m^{th} antenna port included in the antenna array A may be determined, based on an element w_{m,n} whose value is 1 and that is included in the fourth mapping matrix W4, as an n^{th} antenna port corresponding to the antenna port group 4.

It may be understood that m represents the m^{th} antenna port included in the antenna array A, n represents the n^{th} antenna port included in the antenna port group 3 or the antenna port group 4, and m and n meet the following relationships: 1≤m≤64, and 1≤n≤32.

It may be understood that the two 64×32-dimensional mapping matrices (including the third mapping matrix W3 and the fourth mapping matrix W4) each include 32 elements whose values are 1, values of remaining 64×32-32 elements in the mapping matrix are the second value, and the second value is not 1. For example, the second value may be 0.

It should be understood that the first value being 1 and the second value being 0 in this embodiment of this application are merely used as a possible example for description, and should not constitute a limitation on embodiments of this application. Optionally, the first value and the second value may alternatively be other different values.

FIG. 5C is a diagram of dividing an antenna array according to an embodiment of this application.

As shown in FIG. 5C, the antenna array A is a regular antenna array, of the network device, including 64 antenna ports uniformly arranged in eight rows and eight columns.

In an aspect, the antenna array A may be properly divided in a physical division manner, to obtain four antenna port groups that each include 16 antenna ports, that is, an antenna port group 5, an antenna port group 6, an antenna port group 7, and an antenna port group 8 in FIG. 5C.

The antenna port group 5, the antenna port group 6, the antenna port group 7, and the antenna port group 8 each is a regular antenna array including 16 antenna ports uniformly arranged in four rows and four columns.

It may be understood that proper division herein may specifically include but is not limited to division manners such as horizontal division, vertical division, and network division. This is not limited in this embodiment of this application.

It may be understood that the antenna port group 5, the antenna port group 6, the antenna port group 7, and the antenna port group 8 may be considered as four virtual TRPs, and the four virtual TRPs (the antenna port group 5, the antenna port group 6, the antenna port group 7, and the antenna port group 8) each may receive and send data through 16 antenna ports included in the virtual TRP.

In another aspect, a mapping relationship between antenna ports included in the antenna port group 5, the antenna port group 6, the antenna port group 7, and the antenna port group 8 and the antenna ports included in the antenna array A may meet the following conditions:
(a) the antenna ports included in each of the antenna port group 5, the antenna port group 6, the antenna port group 7, and the antenna port group 8 is a subset of the antenna ports included in the antenna array A;
(b) a total quantity of the antenna ports included in the antenna port group 5, the antenna port group 6, the antenna port group 7, and the antenna port group 8 is equal to a total quantity of the antenna ports included in the antenna array A; and
(c) the antenna port group 5, the antenna port group 6, the antenna port group 7, and the antenna port group 8 include different antenna ports.

It may be understood that the antenna port group 5, the antenna port group 6, the antenna port group 7, and the antenna port group 8 may be considered as four subsets obtained by classifying the antenna ports included in the antenna array A. In addition, there is no intersection set between the four subsets, the four subsets are not empty sets, and a union set of the four subsets is the antenna ports included in the antenna array A.

In still another aspect, the mapping relationship between the antenna ports included in the antenna port group 5, the antenna port group 6, the antenna port group 7, and the antenna port group 8 and the antenna ports included in the antenna array A may also meet four 64×16-dimensional mapping matrices.

A fifth mapping matrix W5 in the four 64×16-dimensional mapping matrices represents a mapping relationship between 16 antenna ports included in the antenna port group 5 and the 64 antenna ports included in the antenna array A. A sixth mapping matrix W6 in the four 64×16-dimensional mapping matrices represents a mapping relationship between 16 antenna ports included in the antenna port group 6 and the 64 antenna ports included in the antenna array A. A seventh mapping matrix W7 in the four 64×16-dimensional mapping matrices represents a mapping relationship between 16 antenna ports included in the antenna port group 7 and the 64 antenna ports included in the antenna array A. An eighth mapping matrix W8 in the four 64×16-dimensional mapping matrices represents a mapping relationship between 16 antenna ports included in the antenna port group 8 and the 64 antenna ports included in the antenna array A.

It may be understood that the four 64×16-dimensional mapping matrices {W5, W6, W7, W8} may be used to represent the mapping relationship between the antenna ports included in the antenna port group 5, the antenna port group 6, the antenna port group 7, and the antenna port group 8 and the antenna ports included in the antenna array A.

Further, the four 64×16-dimensional mapping matrices may be respectively used to determine the antenna ports corresponding to the antenna port group 5, the antenna port group 6, the antenna port group 7, and the antenna port group 8.

The fifth mapping matrix W5 in the four 64×16-dimensional mapping matrices is used to determine the antenna ports corresponding to the antenna port group 5. Specifically, an m^{th} antenna port included in the antenna array A may be determined, based on an element w_{m,n} whose value is the first value (for example, the first value is 1) and that is included in the fifth mapping matrix W5, as an n^{th} antenna port corresponding to the antenna port group 5. The sixth mapping matrix W6 in the four 64×16-dimensional mapping matrices is used to determine the antenna ports corresponding to the antenna port group 6. Specifically, the m^{th} antenna port included in the antenna array A may be determined, based on an element w_{m,n} whose value is 1 and that is included in the sixth mapping matrix W6, as an n^{th} antenna port corresponding to the antenna port group 6. The seventh mapping matrix W7 in the four 64×16-dimensional mapping matrices is used to determine the antenna ports corresponding to the antenna port group 7. Specifically, the m^{th} antenna port included in the antenna array A may be determined, based on an element w_{m,n} whose value is 1 and that is included in the seventh mapping matrix W7, as an n^{th} antenna port corresponding to the antenna port group 7. The eighth mapping matrix W8 in the four 64×16-dimensional mapping matrices is used to determine the antenna ports corresponding to the antenna port group 8. Specifically, the m^{th} antenna port included in the antenna array A may be determined, based on an element w_{m,n} whose value is 1 and that is included in the eighth mapping matrix W8, as an n^{th} antenna port corresponding to the antenna port group 8.

It may be understood that m represents the m^{th} antenna port included in the antenna array A, n represents an n^{th} antenna port included in the antenna port group 5, the antenna port group 6, the antenna port group 7, or the antenna port group 8, and m and n meet the following relationships: 1≤m≤64, and 1≤n≤16.

It may be understood that the four 64×16-dimensional mapping matrices (including the fifth mapping matrix W5, the sixth mapping matrix W6, the seventh mapping matrix W7, and the eighth mapping matrix W8) each include 16 elements whose values are 1, values of remaining 64× 16-16 elements in the mapping matrix are the second value, and the second value is not 1. For example, the second value may be 0.

It should be understood that the first value being 1 and the second value being 0 in this embodiment of this application are merely used as a possible example for description, and should not constitute a limitation on embodiments of this application. Optionally, the first value and the second value may alternatively be other different values.

FIG. 6 is a diagram of dividing an antenna array according to an embodiment of this application.

As shown in FIG. 6, the antenna array B is an irregular antenna array, of the network device, including 48 antenna ports that are non-uniformly arranged.

In an aspect, the antenna array B may be properly divided in a physical division manner, to obtain three antenna port groups that each include 16 antenna ports, that is, an antenna port group 9, an antenna port group 10, and an antenna port group 11 in FIG. 6.

The antenna port group 9, the antenna port group 10, and the antenna port group 11 each is a regular antenna array including 16 antenna ports uniformly arranged in four rows and four columns.

It may be understood that proper division herein may specifically include but is not limited to division manners such as horizontal division, vertical division, and network division. This is not limited in this embodiment of this application.

It may be understood that the antenna port group 9, the antenna port group 10, and the antenna port group 11 may be considered as three virtual TRPs, and the three virtual TRPs (the antenna port group 9, the antenna port group 10, and the antenna port group 11) each may receive and send data through 16 antenna ports included in the virtual TRP.

In another aspect, a mapping relationship between antenna ports included in the antenna port group 9, the antenna port group 10, and the antenna port group 11 and the antenna ports included in the antenna array B may meet the following conditions:
(a) the antenna ports included in each of the antenna port group 9, the antenna port group 10, and the antenna port group 11 is a subset of the antenna ports included in the antenna array B;
(b) a total quantity of the antenna ports included in the antenna port group 9, the antenna port group 10, and the antenna port group 11 is equal to a total quantity of the antenna ports included in the antenna array B; and
(c) the antenna port group 9, the antenna port group 10, and the antenna port group 11 include different antenna ports.

It may be understood that the antenna port group 9, the antenna port group 10, and the antenna port group 11 may be considered as three subsets obtained by classifying the antenna ports included in the antenna array B. In addition, there is no intersection set between the three subsets, the three subsets are not empty sets, and a union set of the three subsets is the antenna ports included in the antenna array B.

In still another aspect, the mapping relationship between the antenna ports included in the antenna port group 9, the antenna port group 10, and the antenna port group 11 and the antenna ports included in the antenna array B may also meet three 48×16-dimensional mapping matrices.

A ninth mapping matrix W9 in the three 48×16-dimensional mapping matrices represents a mapping relationship between 16 antenna ports included in the antenna port group 9 and the 48 antenna ports included in the antenna array B. A tenth mapping matrix W10 in the three 48×16-dimensional mapping matrices represents a mapping relationship between 16 antenna ports included in the antenna port group 10 and the 48 antenna ports included in the antenna array B. An eleventh mapping matrix W11 in the three 48×16-dimensional mapping matrices represents a mapping relationship between 16 antenna ports included in the antenna port group 11 and the 48 antenna ports included in the antenna array B.

It may be understood that the three 48×16-dimensional mapping matrices {W9, W10, W11} may be used to represent the mapping relationship between the antenna ports included in the antenna port group 9, the antenna port group 10, and the antenna port group 11 and the antenna ports included in the antenna array B.

Further, the three 48×16-dimensional mapping matrices may be respectively used to determine the antenna ports corresponding to the antenna port group 9, the antenna port group 10, and the antenna port group 11.

The ninth mapping matrix W9 in the three 48×16-dimensional mapping matrices is used to determine the antenna ports corresponding to the antenna port group 9. Specifically, an m^{th} antenna port included in the antenna array B may be determined, based on an element w_{m,n} whose value is the first value (for example, the first value is 1) and that is included in the ninth mapping matrix W9, as an n^{th} antenna port corresponding to the antenna port group 9. The tenth mapping matrix W10 in the three 48×16-dimensional mapping matrices is used to determine the antenna ports corresponding to the antenna port group 10. Specifically, an m^{th} antenna port included in the antenna array B may be determined, based on an element w_{m,n} whose value is 1 and that is included in the tenth mapping matrix W10, as an n^{th} antenna port corresponding to the antenna port group 10. The eleventh mapping matrix W11 in the three 48×16-dimensional mapping matrices is used to determine the antenna ports corresponding to the antenna port group 11. Specifically, an m^{th} antenna port included in the antenna array B may be determined, based on an element w_{m,n} whose value is 1 and that is included in the eleventh mapping matrix W11, as an n^{th} antenna port corresponding to the antenna port group 11.

It may be understood that m represents the m^{th} antenna port included in the antenna array B, n represents an n^{th} antenna port included in the antenna port group 9, the antenna port group 10, or the antenna port group 11, and m and n meet the following relationships: 1≤m≤48, and 1≤n≤16.

It may be understood that the three 48×16-dimensional mapping matrices (including the ninth mapping matrix W9, the tenth mapping matrix W10, and the eleventh mapping matrix W11) each include 16 elements whose values are 1, values of remaining 48×16-16 elements in the mapping matrix are the second value, and the second value is not 1. For example, the second value may be 0.

It should be understood that the first value being 1 and the second value being 0 in this embodiment of this application are merely used as a possible example for description, and should not constitute a limitation on embodiments of this application. Optionally, the first value and the second value may alternatively be other different values.

It should be understood that antenna array division shown in FIG. 5A, FIG. 5B, FIG. 5C, and FIG. 6 is merely used as possible examples for description, and should not constitute a limitation on embodiments of this application. All embodiments obtained based on a supplement or a proper variation of the example division fall within the protection scope of embodiments of this application.

It should be understood that antenna array division shown in FIG. 5A, FIG. 5B, FIG. 5C, and FIG. 6 is merely described by using single-polarized antenna arrays as possible examples, and should not constitute a limitation on a polarization type of the antenna array in embodiments of this application. An antenna array with a plurality of polarization directions also falls within the protection scope of embodiments of this application.

FIG. 7 is a schematic flowchart of a communication method according to an embodiment of this application. It may be understood that steps in this embodiment of this application may be considered as a proper variation or supplement to the embodiment in FIG. 4. Alternatively, it may be understood that the communication method in this embodiment of this application may be considered as an embodiment that can be independently performed. This is not limited in this application. The communication method in this embodiment of this application is applied to the field of communication technologies, for example, communication in a CSI measurement process. The communication method includes but is not limited to the following steps.

S701: A network device sends first information to a terminal device. Correspondingly, the terminal device receives the first information from the network device.

This step is consistent with step S401, and details are not described herein again.

S702: The network device sends second information to the terminal device. Correspondingly, the terminal device receives the second information from the network device.

This step is consistent with step S402, and details are not described herein again.

It may be understood that the network device in this embodiment of this application may correspond to the network device in FIG. 4, and the terminal device in this embodiment of this application may correspond to the terminal device in FIG. 4. Therefore, for the network device and the terminal device in this embodiment of this application, refer to the descriptions of the network device and the terminal device in FIG. 4. Details are not described herein again.

S703: The network device sends reference signals to the terminal device. Correspondingly, the terminal device receives the reference signals sent by the network device.

After sending the first information and the second information, the network device further sends the reference signals (for example, CSI-RSs) to the terminal device on corresponding K reference signal resources by using K antenna port groups respectively.

Correspondingly, the terminal device receives, on the K reference signal resources, the reference signals (for example, the CSI-RSs) sent by the network device.

S704: The terminal device performs channel measurement.

The terminal device performs channel measurement on the K reference signal resources according to indications of the first information and the second information, that is, measures the reference signals (for example, the CSI-RSs) received on the K reference signal resources.

S705: The terminal device sends channel state information to the network device. Correspondingly, the network device receives the channel state information sent by the terminal device.

After completing channel measurement, the terminal device sends the channel state information to the network device, that is, reports, based on a first codebook, joint channel state information corresponding to the K reference signal resources.

Correspondingly, the network device receives the channel state information sent by the terminal device, that is, receives the joint channel state information that corresponds to the K reference signal resources and that is reported by the terminal device based on the first codebook.

S706: The network device determines first channel information.

Specifically, the network device determines, based on a type of the first codebook and the joint channel state information corresponding to the K reference signal resources, joint first channel information of antenna ports included in the K antenna port groups.

It may be understood that the first channel information herein includes a PMI reported by the terminal device, and may be specifically information fed back by the terminal device for determining a channel matrix or a precoding matrix. The first channel information may further include a joint RI, CQI, and the like that correspond to the K reference signal resources. This is not limited in this embodiment of this application.

S707: The network device determines second channel information.

Specifically, the network device then determines, based on the first channel information and a mapping relationship between the antenna ports included in the K antenna port groups and antenna ports included in one antenna array of the network device, the second channel information corresponding to the antenna array of the network device.

It may be understood that the second channel information herein includes the channel matrix or the precoding matrix determined based on a feedback amount corresponding to the PMI reported by the terminal device, and the second channel information may be used for data transmission between the network device and the terminal device.

Optionally, S708 is as follows: The network device performs data transmission with the terminal device.

The network device performs data transmission with the terminal device based on the second channel information.

In this embodiment of this application, the antenna ports included in the antenna array of the network device are classified to obtain the K antenna port groups that each include at least one antenna port. The K antenna port groups respectively correspond to the K reference signal resources. For each antenna port group, a reference signal is sent on a reference signal resource corresponding to the antenna port group, to implement CSI measurement between the network device and the terminal device. In this way, for a network device with an antenna array having more than a specific quantity of antenna ports (for example, more than 32 antenna ports), even under an NZP CSI-RS resource port constraint, channel information corresponding to each antenna port included in one antenna array of the network device can be obtained, so that CSI measurement precision is improved. In addition, an antenna port included in each of the K antenna port groups obtained by properly dividing the antenna array of the network device is uniformly arranged, so that channel state information can be reported by using a high-precision codebook in any arrangement scenario of the antenna array of the network device, and therefore the CSI measurement precision is improved.

The foregoing describes in detail the methods provided in embodiments of this application. The following provides an apparatus for implementing any one of the methods in embodiments of this application. For example, an apparatus including units (or means) for implementing steps performed by a device in any one of the foregoing methods is provided.

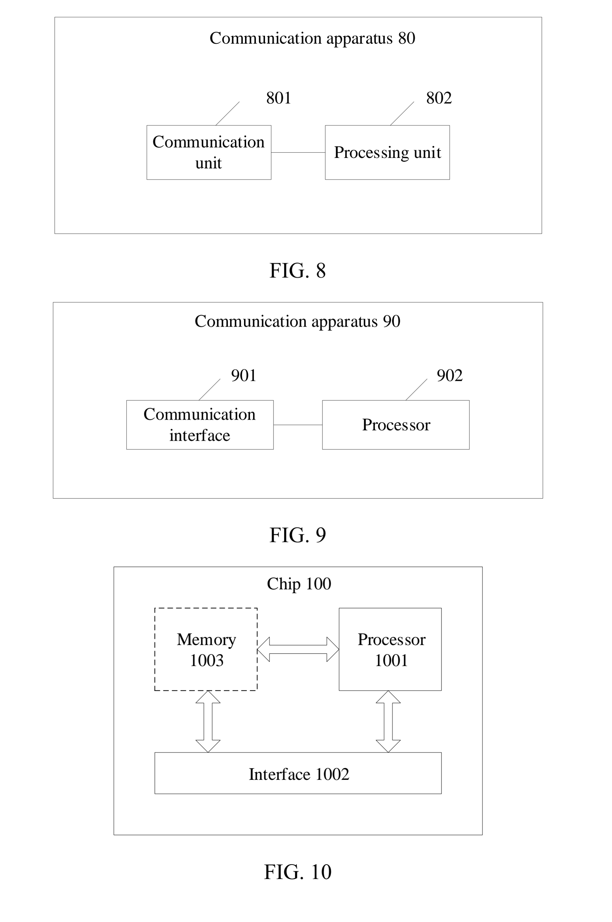

FIG. 8 is a diagram of a structure of a communication apparatus according to an embodiment of this application.

As shown in FIG. 8, the communication apparatus 80 may include a communication unit 801 and a processing unit 802. The communication unit 801 and the processing unit 802 may be software, hardware, or a combination of software and hardware.

The communication unit 801 may implement a sending function and/or a receiving function, and the communication unit 801 may also be described as a transceiver unit. Alternatively, the communication unit 801 may be a unit integrating an obtaining unit and a sending unit. The obtaining unit is configured to implement a receiving function, and the sending unit is configured to implement a sending function. Optionally, the communication unit 801 may be configured to receive information sent by another apparatus, and may be further configured to send information to the another apparatus.

In a possible design, the communication apparatus 80 may correspond to the network device in the method embodiments shown in FIG. 4 and FIG. 7. For example, the communication apparatus 80 may be the network device, or may be a chip in the network device. The communication apparatus 80 may include units configured to perform the operations performed by the network device in the method embodiments shown in FIG. 4 and FIG. 7. In addition, the units in the communication apparatus 80 separately implement the operations performed by the network device in the method embodiments shown in FIG. 4 and FIG. 7. The units are described as follows:

The communication unit 801 is configured to send first information and second information to a terminal device.

The first information indicates K reference signal resources, the K reference signal resources respectively correspond to K antenna port groups, each antenna port group includes at least one antenna port, there is a mapping relationship between antenna ports included in the K antenna port groups and antenna ports included in one antenna array of the network device, and K is an integer greater than 1. The second information indicates a type configuration of a first codebook, and the type configuration of the first codebook indicates the terminal device to report, based on the first codebook, joint channel state information corresponding to the K reference signal resources.

In a possible implementation, the apparatus further includes:
the processing unit 802, configured to generate the first information and the second information.

In a possible implementation, the K reference signal resources respectively corresponding to the K antenna port groups are different from each other.

In a possible implementation, quantities of antenna ports separately included in the K antenna port groups are the same.

In a possible implementation, quantities of antenna ports separately included in the K antenna port groups are different from each other.

In a possible implementation, the antenna port included in each antenna port group is uniformly arranged.

In a possible implementation, that there is the mapping relationship between the antenna ports included in the K antenna port groups and the antenna ports included in the antenna array of the network device includes:
the antenna port included in each antenna port group is a subset of the antenna ports included in the antenna array of the network device, a total quantity of the antenna ports included in the K antenna port groups is equal to a total quantity of the antenna ports included in the antenna array of the network device, and the K antenna port groups include different antenna ports.

In a possible implementation, the mapping relationship between the antenna ports included in the K antenna port groups and the antenna ports included in the antenna array of the network device meets K M×N-dimensional mapping matrices.

A first mapping matrix W1 in the K M×N-dimensional mapping matrices represents a mapping relationship between N antenna ports included in a first antenna port group and M antenna ports included in the antenna array of the network device, the first antenna port group is any one of the K antenna port groups, N is an integer greater than 0 and less than M, and M is a positive integer.

In a possible implementation, the K M×N-dimensional mapping matrices are respectively used to determine the antenna ports corresponding to the K antenna port groups.

The first mapping matrix W1 in the K M×N-dimensional mapping matrices is used to determine the antenna port corresponding to the first antenna port group, a first element w_{m,n} included in W1 is a first value, m represents an m^{th} antenna port included in the antenna array of the network device, n represents an n^{th} antenna port included in the first antenna port group, and m and n meet the following relationships: 1≤m≤M, and 1≤n≤N.

In a possible implementation, a type of the first codebook is a coherent joint transmission CJT codebook.

In a possible implementation, the processing unit 802 is further configured to determine, based on the type of the first codebook and the joint channel state information corresponding to the K reference signal resources, joint first channel information of the antenna ports included in the K antenna port groups; and
the processing unit 802 is further configured to determine, based on the first channel information and the mapping relationship between the antenna ports included in the K antenna port groups and the antenna ports included in the antenna array of the network device, second channel information corresponding to the antenna array of the network device, where the second channel information is used for data transmission between the network device and the terminal device.

In a possible implementation, the communication unit 801 is further configured to: send reference signals to the terminal device on the corresponding K reference signal resources by using the K antenna port groups respectively, and receive the joint channel state information that corresponds to the K reference signal resources and that is from the terminal device.

In a possible implementation, the first information includes information about the K reference signal resources, and the information about the K reference signal resources indicates the terminal device to perform channel measurement on the K reference signal resources.

In a possible implementation, the second information includes information about the first codebook, and the information about the first codebook indicates the terminal device to report, based on the first codebook, the joint channel state information corresponding to the K reference signal resources.

In a possible implementation, the first information and/or the second information are/is carried in at least one of the following:
a radio resource control RRC message, a media access control control element MAC CE, downlink control information DCI, and a physical downlink shared channel PDSCH.

In an implementation, the communication apparatus is a communication device. When the communication apparatus is the communication device, the communication unit may be a transceiver or an input/output interface, and the processing unit may be at least one processor. Optionally, the transceiver may be a transceiver circuit. Optionally, the input/output interface may be an input/output circuit.

In another implementation, the communication apparatus is a chip (system) or a circuit used in a communication device. When the communication apparatus is the chip (system) or the circuit used in the communication device, the communication unit may be a communication interface (input/output interface), an interface circuit, an output circuit, an input circuit, a pin, a related circuit, or the like on the chip (system) or the circuit; and the processing unit may be at least one processor, a processing circuit, a logic circuit, or the like.

In another possible design of the communication apparatus 80 shown in FIG. 8, the communication apparatus 80 may correspond to the terminal device in the method embodiments shown in FIG. 4 and FIG. 7. For example, the communication apparatus 80 may be the terminal device, or may be a chip in the terminal device. The communication apparatus 80 may include units configured to perform the operations performed by the terminal device in the method embodiments shown in FIG. 4 and FIG. 7. In addition, the units in the communication apparatus 80 separately implement the operations performed by the terminal device in the method embodiments shown in FIG. 4 and FIG. 7. The units are described as follows:

The communication unit 801 is configured to receive first information and second information from a network device.

The first information indicates K reference signal resources, the K reference signal resources respectively correspond to K antenna port groups, each antenna port group includes at least one antenna port, there is a mapping relationship between antenna ports included in the K antenna port groups and antenna ports included in one antenna array of the network device, and K is an integer greater than 1. The second information indicates a type configuration of a first codebook, and the type configuration of the first codebook indicates a terminal device to report, based on the first codebook, joint channel state information corresponding to the K reference signal resources.

In a possible implementation, the apparatus further includes:
the processing unit 802, configured to perform channel measurement on the K reference signal resources.

In a possible implementation, the K reference signal resources respectively corresponding to the K antenna port groups are different from each other.

In a possible implementation, quantities of antenna ports separately included in the K antenna port groups are the same.

In a possible implementation, quantities of antenna ports separately included in the K antenna port groups are different from each other.

In a possible implementation, the antenna port included in each antenna port group is uniformly arranged.

In a possible implementation, that there is the mapping relationship between the antenna ports included in the K antenna port groups and the antenna ports included in the antenna array of the network device includes:
the antenna port included in each antenna port group is a subset of the antenna ports included in the antenna array of the network device, a total quantity of the antenna ports included in the K antenna port groups is equal to a total quantity of the antenna ports included in the antenna array of the network device, and the K antenna port groups include different antenna ports.

In a possible implementation, the mapping relationship between the antenna ports included in the K antenna port groups and the antenna ports included in the antenna array of the network device meets K M×N-dimensional mapping matrices.

A first mapping matrix W1 in the K M×N-dimensional mapping matrices represents a mapping relationship between N antenna ports included in a first antenna port group and M antenna ports included in the antenna array of the network device, the first antenna port group is any one of the K antenna port groups, N is an integer greater than 0 and less than M, and M is a positive integer.

In a possible implementation, the K M×N-dimensional mapping matrices are respectively used to determine the antenna ports corresponding to the K antenna port groups.

The first mapping matrix W1 in the K M×N-dimensional mapping matrices is used to determine the antenna port corresponding to the first antenna port group, a first element w_{m,n} included in W1 is a first value, m represents an m^{th} antenna port included in the antenna array of the network device, n represents an n^{th} antenna port included in the first antenna port group, and m and n meet the following relationships: 1≤m≤M, and 1≤n≤N.

In a possible implementation, a type of the first codebook is a coherent joint transmission CJT codebook.

In a possible implementation, the communication unit 801 is further configured to: receive reference signals sent on the corresponding K reference signal resources by using the K antenna port groups respectively, and report, to the network device, the joint channel state information corresponding to the K reference signal resources.

In a possible implementation, the first information includes information about the K reference signal resources, and the information about the K reference signal resources indicates the terminal device to perform channel measurement on the K reference signal resources.

In a possible implementation, the second information includes information about the first codebook, and the information about the first codebook indicates the terminal device to report, based on the first codebook, the joint channel state information corresponding to the K reference signal resources.

In a possible implementation, the first information and/or the second information are/is carried in at least one of the following:
a radio resource control RRC message, a media access control control element MAC CE, downlink control information DCI, and a physical downlink shared channel PDSCH.

In an implementation, the communication apparatus is a communication device. When the communication apparatus is the communication device, the communication unit may be a transceiver or an input/output interface, and the processing unit may be at least one processor. Optionally, the transceiver may be a transceiver circuit. Optionally, the input/output interface may be an input/output circuit.

In another implementation, the communication apparatus is a chip (system) or a circuit used in a communication device. When the communication apparatus is the chip (system) or the circuit used in the communication device, the communication unit may be a communication interface (input/output interface), an interface circuit, an output circuit, an input circuit, a pin, a related circuit, or the like on the chip (system) or the circuit; and the processing unit may be at least one processor, a processing circuit, a logic circuit, or the like.

According to this embodiment of this application, the units in the apparatus shown in FIG. 8 may be separately or all combined into one or more other units, or a specific unit (or some specific units) in the apparatus may be further split into a plurality of units with more detailed functions. This can implement a same operation without affecting implementation of technical effect of this embodiment of this application. The foregoing units are obtained through division based on logical functions. During actual application, a function of one unit may be implemented by a plurality of units, or functions of a plurality of units are implemented by one unit. In other embodiments of this application, an electronic device may further include other units. During actual application, the functions may alternatively be implemented with assistance of the other units, and may be implemented by a plurality of units in collaboration.

It should be noted that, for implementations of the units, reference may be further made to corresponding descriptions in the method embodiments shown in FIG. 4 and FIG. 7.

In the communication apparatus 80 described in FIG. 8, the antenna ports included in the antenna array of the network device are classified to obtain the K antenna port groups that each include at least one antenna port. The K antenna port groups respectively correspond to the K reference signal resources. For each antenna port group, a reference signal is sent on a reference signal resource corresponding to the antenna port group, to implement CSI measurement between the network device and the terminal device. In this way, for a network device with an antenna array having more than a specific quantity of antenna ports (for example, more than 32 antenna ports), even under an NZP CSI-RS resource port constraint, channel information corresponding to each antenna port included in one antenna array of the network device can be obtained, so that CSI measurement precision is improved.

FIG. 9 is a diagram of a structure of a communication apparatus according to an embodiment of this application.

It should be understood that the communication apparatus 90 shown in FIG. 9 is merely an example. The communication apparatus in this embodiment of this application may further include another component, or include a component with a function similar to that of each component in FIG. 9, or does not necessarily need to include all components in FIG. 9.

The communication apparatus 90 includes a communication interface 901 and at least one processor 902.

The communication apparatus 90 may correspond to any network element or device in a network device or a terminal device. The communication interface 901 is configured to receive and send signals, and the at least one processor 902 executes program instructions, so that the communication apparatus 90 implements a corresponding procedure of the method performed by a corresponding device in the method embodiments.

In a possible design, the communication apparatus 90 may correspond to the network device in the method embodiments shown in FIG. 4 and FIG. 7. For example, the communication apparatus 90 may be the network device, or may be a chip in the network device. The communication apparatus 90 may include components configured to perform the operations performed by the network device in the method embodiments. In addition, the components in the communication apparatus 90 separately implement the operations performed by the network device in the method embodiments. Details may be as follows:

First information and second information are sent to a terminal device.

The first information indicates K reference signal resources, the K reference signal resources respectively correspond to K antenna port groups, each antenna port group includes at least one antenna port, there is a mapping relationship between antenna ports included in the K antenna port groups and antenna ports included in one antenna array of the network device, and K is an integer greater than 1. The second information indicates a type configuration of a first codebook, and the type configuration of the first codebook indicates the terminal device to report, based on the first codebook, joint channel state information corresponding to the K reference signal resources.

In another possible design, the communication apparatus 90 may correspond to the terminal device in the method embodiments shown in FIG. 4 and FIG. 7. For example, the communication apparatus 90 may be the terminal device, or may be a chip in the terminal device. The communication apparatus 90 may include components configured to perform the operations performed by the terminal device in the method embodiments. In addition, the components in the communication apparatus 90 separately implement the operations performed by the terminal device in the method embodiments. Details may be as follows:

First information and second information are received from a network device.

The first information indicates K reference signal resources, the K reference signal resources respectively correspond to K antenna port groups, each antenna port group includes at least one antenna port, there is a mapping relationship between antenna ports included in the K antenna port groups and antenna ports included in one antenna array of the network device, and K is an integer greater than 1. The second information indicates a type configuration of a first codebook, and the type configuration of the first codebook indicates a terminal device to report, based on the first codebook, joint channel state information corresponding to the K reference signal resources.

In the communication apparatus 90 described in FIG. 9, the antenna ports included in the antenna array of the network device are classified to obtain the K antenna port groups that each include at least one antenna port. The K antenna port groups respectively correspond to the K reference signal resources. For each antenna port group, a reference signal is sent on a reference signal resource corresponding to the antenna port group, to implement CSI measurement between the network device and the terminal device. In this way, for a network device with an antenna array having more than a specific quantity of antenna ports (for example, more than 32 antenna ports), even under an NZP CSI-RS resource port constraint, channel information corresponding to each antenna port included in one antenna array of the network device can be obtained, so that CSI measurement precision is improved.

For a case in which the communication apparatus is a chip or a chip system, refer to a diagram of a structure of a chip shown in FIG. 10.

As shown in FIG. 10, the chip 100 includes a processor 1001 and an interface 1002. There may be one or more processors 1001, and there may be a plurality of interfaces 1002. It should be noted that functions separately corresponding to the processor 1001 and the interface 1002 may be implemented by using a hardware design, may be implemented by using a software design, or may be implemented by using a combination of software and hardware. This is not limited herein.

Optionally, the chip 100 may further include a memory 1003, and the memory 1003 is configured to store necessary program instructions and data.

In this application, the processor 1001 may be configured to: invoke, from the memory 1003, an implementation program of the communication method provided in one or more embodiments of this application for one or more devices or network elements in a network device or a terminal device, and execute instructions included in the program. The interface 1002 may be configured to output an execution result of the processor 1001. In this application, the interface 1002 may be specifically configured to output messages or information of the processor 1001.

For the beam measurement method provided in one or more embodiments of this application, refer to the embodiments shown in FIG. 4 and FIG. 7. Details are not described herein again.

The processor in this embodiment of this application may be a central processing unit (Central Processing Unit, CPU), or the processor may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

The memory in this embodiment of this application is configured to provide storage space, and the storage space may store data such as an operating system and a computer program. The memory includes but is not limited to a random access memory (random access memory, RAM), a read-only memory (read-only memory, ROM), an erasable programmable read-only memory (erasable programmable read-only memory, EPROM), or a compact disc read-only memory (compact disc read-only memory, CD-ROM).

According to the methods provided in embodiments of this application, an embodiment of this application further provides a computer-readable storage medium. The computer-readable storage medium stores a computer program. When the computer program is run on one or more processors, the methods shown in FIG. 4 and FIG. 7 may be implemented.

According to the methods provided in embodiments of this application, an embodiment of this application further provides a computer program product. The computer program product includes a computer program. When the computer program is run on a processor, the methods shown in FIG. 4 and FIG. 7 may be implemented.

An embodiment of this application further provides a system. The system includes at least one communication apparatus 80, communication apparatus 90, or chip 100, and is configured to perform steps performed by a corresponding device in any one of the embodiments of FIG. 4 and FIG. 7.

An embodiment of this application further provides a system. The system includes a network device and a terminal device. The network device is configured to perform the steps performed by the network device in any one of the embodiments of FIG. 4 and FIG. 7. The terminal device is configured to perform the steps performed by the terminal device in any one of the embodiments of FIG. 4 and FIG. 7.

An embodiment of this application further provides a processing apparatus. The apparatus includes a processor and an interface. The processor is configured to perform the method in any one of the foregoing method embodiments.

It should be understood that the processing apparatus may be a chip. For example, the processing apparatus may be a field programmable gate array (field programmable gate array, FPGA), may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, or a discrete hardware component, or may be a system on chip (system on chip, SoC), or may be a central processing unit (central processing unit, CPU), or may be a network processor (network processor, NP), or may be a digital signal processing circuit (digital signal processor, DSP), or may be a micro controller (micro controller unit, MCU), or may be a programmable controller (programmable logic device, PLD) or another integrated chip. The processing apparatus may implement or perform the methods, steps, and logical block diagrams that are disclosed in embodiments of this application. The general-purpose processor may be a microprocessor, or the processor may be any conventional processor or the like. The steps of the method disclosed with reference to embodiments of this application may be directly performed and completed by a hardware decoding processor, or may be performed and completed by using a combination of hardware in the decoding processor and a software module. The software module may be located in a mature storage medium in the art, for example, a random access memory, a flash memory, a read-only memory, a programmable read-only memory, an electrically erasable programmable memory, or a register. The storage medium is located in a memory, and the processor reads information in the memory and completes the steps of the method in combination with hardware of the processor.

It may be understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) and is used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory of the system and method described in this specification includes but is not limited to these memories and any memory of another appropriate type.

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer instructions are loaded and executed on a computer, the procedure or functions according to embodiments of this application are completely or partially generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk drive, or a magnetic tape), an optical medium (for example, a high-density digital video disc (digital video disc, DVD)), a semiconductor medium (for example, a solid state disk (solid state disk, SSD)), or the like.

The units in the foregoing apparatus embodiments totally correspond to the electronic devices in the method embodiments, and corresponding modules or units perform corresponding steps. For example, the communication unit (transceiver) performs receiving or sending steps in the method embodiments, and other steps except sending and receiving may be performed by the processing unit (processor). For a specific function of the unit, refer to the corresponding method embodiment. There may be one or more processors.

It may be understood that in embodiments of this application, the electronic device may perform some or all steps in embodiments of this application. These steps or operations are merely examples. In embodiments of this application, other operations or various variations of the operations may be further performed. In addition, the steps may be performed in a sequence different from a sequence presented in embodiments of this application, and not all operations in embodiments of this application may be performed.

A person of ordinary skill in the art may be aware that, in combination with the examples described in embodiments disclosed in this specification, units and algorithm steps can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the method embodiments. Details are not described herein again.

In several embodiments provided in this application, it should be understood that the disclosed system, apparatus, and method may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, that is, may be located at one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the contributing part, or some of the technical solutions may be implemented in a form of a software product. The computer software product is stored in a storage medium, and includes several instructions for instructing a computer device (which may be a personal computer, a server, a network device, or the like) to perform all or some of the steps of the method described in embodiments of this application. The foregoing storage medium includes any medium that can store program code, for example, a USB flash drive, a removable hard disk, a read-only memory ROM, a random access memory RAM, a magnetic disk, or a compact disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application.

## Claims

1. A communication method, comprising:
sending first information and second information to a terminal device, wherein
the first information indicates K reference signal resources, the K reference signal resources respectively correspond to K antenna port groups, each antenna port group comprises at least one antenna port, there is a mapping relationship between antenna ports comprised in the K antenna port groups and antenna ports comprised in one antenna array of a network device, and K is an integer greater than 1; and the second information indicates a type configuration of a first codebook, and the type configuration of the first codebook indicates the terminal device to report, based on the first codebook, joint channel state information corresponding to the K reference signal resources.

2. The method according to claim 1, wherein the K reference signal resources respectively corresponding to the K antenna port groups are different from each other.

3. The method according to claim 1 or 2, wherein quantities of antenna ports separately comprised in the K antenna port groups are the same.

4. The method according to any one of claims 1 to 3, wherein the antenna port comprised in each antenna port group is uniformly arranged.

5. The method according to any one of claims 1 to 4, wherein that there is the mapping relationship between the antenna ports comprised in the K antenna port groups and the antenna ports comprised in the antenna array of the network device comprises:
the antenna port comprised in each antenna port group is a subset of the antenna ports comprised in the antenna array of the network device, a total quantity of the antenna ports comprised in the K antenna port groups is equal to a total quantity of the antenna ports comprised in the antenna array of the network device, and the K antenna port groups comprise different antenna ports.

6. The method according to any one of claims 1 to 5, wherein the mapping relationship between the antenna ports comprised in the K antenna port groups and the antenna ports comprised in the antenna array of the network device meets K M×N-dimensional mapping matrices; and
a first mapping matrix W1 in the K M×N-dimensional mapping matrices represents a mapping relationship between N antenna ports comprised in a first antenna port group and M antenna ports comprised in the antenna array of the network device, the first antenna port group is any one of the K antenna port groups, N is an integer greater than 0 and less than M, and M is a positive integer.

7. The method according to claim 6, wherein the K M×N-dimensional mapping matrices are respectively used to determine the antenna ports corresponding to the K antenna port groups; and
the first mapping matrix W1 in the K M×N-dimensional mapping matrices is used to determine the antenna port corresponding to the first antenna port group, a first element w_{m,n} comprised in W1 is a first value, m represents an m^{th} antenna port comprised in the antenna array of the network device, n represents an n^{th} antenna port comprised in the first antenna port group, and m and n meet the following relationships: 1≤m≤M, and 1≤n≤N.

8. The method according to any one of claims 1 to 7, wherein a type of the first codebook is a coherent joint transmission CJT codebook.

9. The method according to any one of claims 1 to 8, wherein the method further comprises:
determining, based on the type of the first codebook and the joint channel state information corresponding to the K reference signal resources, joint first channel information of the antenna ports comprised in the K antenna port groups; and
determining, based on the first channel information and the mapping relationship between the antenna ports comprised in the K antenna port groups and the antenna ports comprised in the antenna array of the network device, second channel information corresponding to the antenna array of the network device, wherein the second channel information is used for data transmission between the network device and the terminal device.

10. The method according to any one of claims 1 to 9, wherein the method further comprises:
sending reference signals to the terminal device on the corresponding K reference signal resources by using the K antenna port groups respectively, and receiving the joint channel state information that corresponds to the K reference signal resources and that is sent by the terminal device.

11. A communication method, comprising:
receiving first information and second information from a network device, wherein
the first information indicates K reference signal resources, the K reference signal resources respectively correspond to K antenna port groups, each antenna port group comprises at least one antenna port, there is a mapping relationship between antenna ports comprised in the K antenna port groups and antenna ports comprised in one antenna array of the network device, and K is an integer greater than 1; and the second information indicates a type configuration of a first codebook, and the type configuration of the first codebook indicates a terminal device to report, based on the first codebook, joint channel state information corresponding to the K reference signal resources.

12. The method according to claim 11, wherein the K reference signal resources respectively corresponding to the K antenna port groups are different from each other.

13. The method according to claim 11 or 12, wherein quantities of antenna ports separately comprised in the K antenna port groups are the same.

14. The method according to any one of claims 11 to 13, wherein the antenna port comprised in each antenna port group is uniformly arranged.

15. The method according to any one of claims 11 to 14, wherein that there is the mapping relationship between the antenna ports comprised in the K antenna port groups and the antenna ports comprised in the antenna array of the network device comprises:
the antenna port comprised in each antenna port group is a subset of the antenna ports comprised in the antenna array of the network device, a total quantity of the antenna ports comprised in the K antenna port groups is equal to a total quantity of the antenna ports comprised in the antenna array of the network device, and the K antenna port groups comprise different antenna ports.

16. The method according to any one of claims 11 to 15, wherein the mapping relationship between the antenna ports comprised in the K antenna port groups and the antenna ports comprised in the antenna array of the network device meets K M×N-dimensional mapping matrices; and
a first mapping matrix W1 in the K M×N-dimensional mapping matrices represents a mapping relationship between N antenna ports comprised in a first antenna port group and M antenna ports comprised in the antenna array of the network device, the first antenna port group is any one of the K antenna port groups, N is an integer greater than 0 and less than M, and M is a positive integer.

17. The method according to claim 16, wherein the K M×N-dimensional mapping matrices are respectively used to determine the antenna ports corresponding to the K antenna port groups; and
the first mapping matrix W1 in the K M×N-dimensional mapping matrices is used to determine the antenna port corresponding to the first antenna port group, a first element w_{m,n} comprised in W1 is a first value, m represents an m^{th} antenna port comprised in the antenna array of the network device, n represents an n^{th} antenna port comprised in the first antenna port group, and m and n meet the following relationships: 1≤m≤M, and 1≤n≤N.

18. The method according to any one of claims 11 to 17, wherein a type of the first codebook is a coherent joint transmission CJT codebook.

19. The method according to any one of claims 11 to 18, wherein the method further comprises:
receiving reference signals sent on the corresponding K reference signal resources by using the K antenna port groups respectively, and reporting, to the network device, the joint channel state information corresponding to the K reference signal resources.

20. A communication apparatus, comprising a module or unit configured to perform the method according to any one of claims 1 to 10 or claims 11 to 19.

21. A communication apparatus, comprising a processor, wherein
when the processor invokes a computer program or instructions in a memory, the method according to any one of claims 1 to 10 is performed, or the method according to any one of claims 11 to 19 is performed.

22. A communication apparatus, comprising a logic circuit and an interface, wherein the logic circuit is coupled to the interface; and
the interface is configured to input to-be-processed data; the logic circuit processes the to-be-processed data according to the method according to any one of claims 1 to 10 or claims 11 to 19, to obtain processed data; and the interface is configured to output the processed data.

23. A computer-readable storage medium, wherein
the computer-readable storage medium is configured to store instructions or a computer program; and when the instructions or the computer program is executed, the method according to any one of claims 1 to 10 is implemented, or the method according to any one of claims 11 to 19 is implemented.

24. A computer program product, comprising instructions or a computer program, wherein
when the instructions or the computer program is executed, the method according to any one of claims 1 to 10 is performed, or the method according to any one of claims 11 to 19 is performed.

25. A communication system, comprising the communication apparatus according to claim 20, the communication apparatus according to claim 21, or the communication apparatus according to claim 22.

26. A communication system, comprising a network device and a terminal device, wherein
the network device is configured to perform the method according to any one of claims 1 to 10, and the terminal device is configured to perform the method according to any one of claims 11 to 19.
